(19)

Europäisches Patentamt

European Patent Office

Office européen des brevets

(11) **EP 4 757 454 A1**

(12) **EUROPEAN PATENT APPLICATION**
published in accordance with Art. 153(4) EPC

(43) Date of publication:
**10.06.2026 Bulletin 2026/24**

(21) Application number: **24870445.4**

(22) Date of filing: **11.09.2024**

(51) International Patent Classification (IPC):
**H04W 72/0446** (2023.01)

(52) Cooperative Patent Classification (CPC):
**H04L 27/26; H04W 72/0446**

(86) International application number:
**PCT/CN2024/118214**

(87) International publication number:
**WO 2025/066901 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 CN 202311271055**

(71) Applicant: **HUAWEI TECHNOLOGIES CO., LTD.
Shenzhen 518129 (CN)**

(72) Inventors:
• ZHU, Huiying
 **Shenzhen, Guangdong 518129 (CN)**
• HUANG, Su
 **Shenzhen, Guangdong 518129 (CN)**
• LI, Chao
 **Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD AND APPARATUS**

(57) A communication method and apparatus are applied to the field of wireless communication technologies. The method includes: A first terminal device generates a plurality of OFDM symbols, where the plurality of OFDM symbols are symbols used for sidelink transmission in one slot, the plurality of OFDM symbols include one or more of the following symbols: an AGC symbol, a GAP symbol, a PSCCH symbol, a PSSCH DMRS symbol, or an SL CSI-RS symbol, the plurality of OFDM symbols further include an SL PRS symbol, and the SL PRS symbol is last $M$ symbols other than the one or more symbols of the plurality of OFDM symbols, where $M$ is 1 or $M$ is an integer greater than 1, and when $M$ is greater than 1, the $M$ symbols are $M$ consecutive symbols; and sends the plurality of OFDM symbols. According to the method provided in this application, a location of the SL PRS symbol can be determined, and SL positioning performance can be improved.

First terminal device

Second terminal device

S301: Generate a plurality of OFDM symbols, where the plurality of OFDM symbols include an SL PRS symbol, and the SL PRS symbol is last M symbols other than an AGC symbol, a GAP symbol, a PSCCH symbol, a PSSCH DMRS symbol, and an SL CSI-RS symbol of the plurality of OFDM symbols

S302: The plurality of OFDM symbols

S303: Determine the SL PRS symbol

FIG. 3

EP 4 757 454 A1

**Description**

CROSS-REFERENCE TO RELATED APPLICATIONS

This application claims priority to Chinese Patent Application No. 202311271055.1, filed with the China National Intellectual Property Administration on September 27, 2023 and entitled "COMMUNICATION METHOD AND APPARATUS", which is incorporated herein by reference in its entirety.

TECHNICAL FIELD

This application relates to the field of wireless communication technologies, and in particular, to a communication method and apparatus.

BACKGROUND

To meet diversified requirements of vehicles for positioning services in terms of latency, precision, and security, the 3rd generation partnership project (3rd generation partnership project, 3GPP) has incorporated sidelink (sidelink, SL) positioning as an extension and enhancement of a new radio (new radio, NR) positioning technology in its wireless communication standards, and launched research and standardization work on related technologies. leveraging its own features, SL positioning reuses NR communication related positioning methods as much as possible, for example, including but not limited to round trip time (round trip time, RTT) difference, sidelink time difference of arrival (sidelink time difference of arrival, SL TDOA), sidelink angle of arrival (sidelink angle of arrival, SL AOA), or sidelink angle of departure (sidelink angle of departure, SL AOD), or other positioning methods.

SL positioning and SL communication may share resource pools, to be specific, SL positioning and SL communication may use same resource pools in a time division multiplexing or frequency division multiplexing mode. Currently, for SL positioning and SL communication sharing a resource pool, in one slot, sidelink positioning reference signal (sidelink positioning reference signal, SL PRS) symbols are different from automatic gain control (automatic gain control, AGC) symbols, gap (GAP) symbols, physical sidelink control channel (physical sidelink control channel, PSCCH) symbols, and physical sidelink shared channel (physical sidelink shared channel, PSSCH) demodulation reference signal (demodulation reference signal, DMRS) symbols, and an SL PRS occupies M consecutive symbols. In this case, a location of the SL PRS symbol has a plurality of possibilities, making a terminal device unable to determine the location of the SL PRS symbol.

SUMMARY

Embodiments of this application provide a communication method and apparatus, to determine a location of an SL PRS symbol, so as to improve SL positioning performance.

According to a first aspect, this application provides a communication method. The method may be performed by a first terminal device, or may be performed by a component (such as a chip) in the first terminal device. This is not limited. An example in which the method is performed by the first terminal device is used, and the method includes: The first terminal device generates a plurality of orthogonal frequency division multiplexing (orthogonal frequency division multiplexing, OFDM) symbols, where the plurality of OFDM symbols are symbols used for sidelink transmission in one slot, the plurality of OFDM symbols include one or more of the following symbols: an AGC symbol, a gap (denoted as GAP below) symbol, a PSCCH symbol, a PSSCH DMRS symbol, or an SL CSI-RS symbol, the plurality of OFDM symbols further include an SL PRS symbol, and the SL PRS symbol is last M symbols other than the one or more symbols of the plurality of OFDM symbols, where M is 1 or M is an integer greater than 1, and when M is greater than 1, the M symbols are M consecutive symbols; and sends the plurality of OFDM symbols.

For example, that the first terminal device generates the plurality of OFDM symbols may be replaced with: The first terminal device maps an SL PRS to the M symbol of the plurality of OFDM symbols.

In a possible implementation, the SL CSI-RS symbol is a semi-statically configured symbol, and the first terminal device may further send first information. For example, the first terminal device may send the first information to a second terminal device. The first information may indicate the first terminal device to send an SL CSI-RS, or may indicate the first terminal device not to send an SL CSI-RS. The SL CSI-RS is carried by the SL CSI-RS symbol, or the SL CSI-RS is mapped to the SL CSI-RS symbol. In an example, regardless of whether the first terminal device sends the SL CSI-RS, that is, whether the first information indicates the first terminal device to send the SL CSI-RS or indicates the first terminal device not to send the SL CSI-RS, the plurality of OFDM symbols include the SL CSI-RS symbol. In another example, when the first terminal device sends the SL CSI-RS, that is, the first information indicates to send the SL CSI-RS, the plurality of OFDM symbols include the SL CSI-RS symbol; or when the first terminal device does not send the SL CSI-RS, that is, the first information indicates not to send the SL CSI-RS, the plurality of OFDM symbols include the SL CSI-RS symbol.

In the foregoing implementation, the SL CSI-RS symbol is a semi-statically configured symbol. Regardless of whether the first terminal device sends the SL CSI-RS, the SL PRS symbol is time-division multiplexed with the SL CSI-RS symbol. Alternatively, only when the first terminal device sends the SL CSI-RS, the SL PRS symbol is time-division multiplexed with the SL CSI-RS symbol. This means that when the first terminal device does not send the SL CSI-RS, the SL PRS may be mapped to a symbol originally configured for the SL CSI-RS. In this way, resource utilization can be improved.

According to a second aspect, this application provides a communication method. The method may be performed by a second terminal device, or may be performed by a component (such as a chip) in the second terminal device. This is not limited. An example in which the method is performed by the first terminal device is used, and the method includes: receiving a plurality of OFDM symbols, where the plurality of OFDM symbols are symbols used for sidelink transmission in one slot, the plurality of OFDM symbols include one or more of the following symbols: an AGC symbol, a GAP symbol, a PSCCH symbol, a PSSCH DMRS symbol, or an SL CSI-RS symbol, the plurality of OFDM symbols further include an SL PRS symbol, and the SL PRS symbol is last $M$ symbols other than the one or more symbols of the plurality of OFDM symbols, where $M$ is 1 or $M$ is an integer greater than 1, and when $M$ is greater than 1, the $M$ symbols are $M$ consecutive symbols; and determining the SL PRS symbol.

For example, that the SL PRS symbol is the last $M$ symbol other than the one or more symbols of the plurality of OFDM symbols may be replaced with: The SL PRS symbol is different from the one or more symbols, and the SL PRS symbol is the last $M$ symbol of a symbol available for the SL PRS of the plurality of OFDM symbols; or may be replaced with: The SL PRS symbol is time-division multiplexed with the one or more symbols, and the SL PRS symbol is the last $M$ symbol of the symbol available for the SL PRS of the plurality of OFDM symbols. The symbol available for the SL PRS is the symbol other than the one or more symbols of the plurality of OFDM symbols.

For example, the SL PRS symbol may be the last $M$ symbol other than the AGC symbol, the GAP symbol, the PSCCH symbol, and the PSSCH DMRS symbol of the plurality of OFDM symbols. Alternatively, the SL PRS symbol may be the last $M$ symbol other than the AGC symbol, the GAP symbol, the PSCCH symbol, the PSSCH DMRS symbol, and the SL CSI-RS symbol of the plurality of OFDM symbols.

According to the method provided in this application, the SL PRS symbol is the last $M$ symbol other than the one or more symbols of the plurality of OFDM symbols used for SL transmission in one slot. A value of $M$ may be preconfigured, or may be configured by using higher layer signaling and/or sidelink control information (sidelink control information, SCI). This means that a terminal device (for example, the first terminal device or the second terminal device) can uniquely determine a location of the SL PRS symbol of the plurality of OFDM symbols, so that the location of the SL PRS symbol is determined, and SL positioning performance can be improved.

In a possible implementation, the SL CSI-RS symbol is a semi-statically configured symbol, and the second terminal device may further receive first information. For example, the second terminal device may receive the first information from the first terminal device. The first information may indicate the first terminal device to send an SL CSI-RS, or may indicate the first terminal device not to send an SL CSI-RS. The SL CSI-RS is carried by the SL CSI-RS symbol, or the SL CSI-RS is mapped to the SL CSI-RS symbol. In an example, regardless of whether the first terminal device sends the SL CSI-RS, that is, whether the first information indicates the first terminal device to send the SL CSI-RS or indicates the first terminal device not to send the SL CSI-RS, the plurality of OFDM symbols include the SL CSI-RS symbol. In another example, when the first terminal device sends the SL CSI-RS, that is, the first information indicates to send the SL CSI-RS, the plurality of OFDM symbols include the SL CSI-RS symbol; or when the first terminal device does not send the SL CSI-RS, that is, the first information indicates not to send the SL CSI-RS, the plurality of OFDM symbols include the SL CSI-RS symbol.

Based on the first aspect or the second aspect, in a possible implementation, locations of the AGC symbol, the GAP symbol, the PSCCH symbol, the PSSCH DMRS symbol, and the SL CSI-RS symbol of the plurality of OFDM symbols may be shown as follows:

The AGC symbol may be a $1^{st}$ symbol of the plurality of OFDM symbols;

the GAP symbol may be a last symbol of the plurality of OFDM symbols;
the PSCCH symbol may include a $2^{nd}$ symbol and a $3^{rd}$ symbol of the plurality of OFDM symbols, or the PSCCH symbol may include a $2^{nd}$ symbol, a $3^{rd}$ symbol, and a $4^{th}$ symbol of the plurality of OFDM symbols;
the PSSCH DMRS symbol may include the $2^{nd}$ symbol and a $6^{th}$ symbol of the plurality of OFDM symbols, or the PSSCH DMRS symbol may include the $4^{th}$ symbol and a $9^{th}$ symbol of the plurality of OFDM symbols, or the PSSCH DMRS symbol includes the $4^{th}$ symbol and an $11^{th}$ symbol of the plurality of OFDM symbols, or the PSSCH DMRS symbol includes a $5^{th}$ symbol and a $9^{th}$ symbol of the plurality of OFDM symbols, or the PSSCH DMRS symbol includes a $5^{th}$ symbol and an $11^{th}$ symbol of the plurality of OFDM symbols, or the PSSCH DMRS symbol includes the $2^{nd}$ symbol, a $5^{th}$ symbol, and an $8^{th}$ symbol of the plurality of OFDM symbols, or the PSSCH DMRS symbol also includes the $2^{nd}$ symbol, a $6^{th}$ symbol, and a $10^{th}$ symbol of the plurality of OFDM symbols, or the PSSCH DMRS symbol further

includes the 2nd symbol, a 7th symbol, and a 12th symbol of the plurality of OFDM symbols, or the PSSCH DMRS symbol further includes the 2nd symbol, a 5th symbol, an 8th symbol, and an 11th symbol of the plurality of OFDM symbols; and

the SL CSI-RS symbol may be one of the 4th symbol to a 2nd-to-last symbol of the plurality of OFDM symbols. Assuming that the plurality of OFDM symbols are denoted as Y OFDM symbols, and Y is an integer greater than or equal to 7 and less than or equal to 14, the SL CSI-RS symbol may be one of the 4th symbol to a $(Y-1)^{th}$ symbol of the Y symbols.

In the foregoing implementation, the terminal device (for example, the first terminal device or the second terminal device) may determine the locations of the AGC symbol, the GAP symbol, the PSCCH symbol, the PSSCH DMRS symbol, and the SL CSI-RS symbol of the plurality of OFDM symbols.

Based on the first aspect or the second aspect, in a possible implementation, when the plurality of OFDM symbols include the AGC symbol, the GAP symbol, the PSCCH symbol, the PSSCH DMRS symbol, the SL CSI-RS symbol, and the SL PRS symbol, the location of the SL PRS symbol of the plurality of OFDM symbols may be shown as follows:

The plurality of OFDM symbols are 14 OFDM symbols, the PSSCH DMRS symbol includes a 4th symbol and an 11th symbol of the 14 OFDM symbols, and the SL CSI-RS symbol is a 13th symbol of the 14 OFDM symbols, where when M is 1, the SL PRS symbol is a 12th symbol of the 14 OFDM symbols; or when M is 2, the SL PRS symbol includes a 9th symbol and a 10th symbol of the 14 OFDM symbols; or when M is 4, the SL PRS symbol includes a 7th symbol, an 8th symbol, a 9th symbol, and a 10th symbol of the 14 OFDM symbols;

the plurality of OFDM symbols are 13 OFDM symbols, the PSSCH DMRS symbol includes a 4th symbol and an 11th symbol of the 13 OFDM symbols, and the SL CSI-RS symbol is a 12th symbol of the 13 OFDM symbols, where when M is 1, the SL PRS symbol is a 10th symbol of the 13 OFDM symbols; or when M is 2, the SL PRS symbol includes a 9th symbol and a 10th symbol of the 13 OFDM symbols; or when M is 4, the SL PRS symbol includes a 7th symbol, an 8th symbol, a 9th symbol, and a 10th symbol of the 14 OFDM symbols;

the plurality of OFDM symbols are 12 OFDM symbols, the PSSCH DMRS symbol includes a 4th symbol and an 11th symbol of the 12 OFDM symbols, and the SL CSI-RS symbol is a 9th symbol of the 12 OFDM symbols, where when M is 1, the SL PRS symbol is a 10th symbol of the 12 OFDM symbols; or when M is 2, the SL PRS symbol includes a 7th symbol and an 8th symbol of the 12 OFDM symbols; or when M is 4, the SL PRS symbol includes a 5th symbol, a 6th symbol, a 7th symbol, and an 8th symbol of the 12 OFDM symbols;

the plurality of OFDM symbols are 11 OFDM symbols, the PSSCH DMRS symbol includes a 4th symbol and a 9th symbol of the 11 OFDM symbols, and the SL CSI-RS symbol is a 10th symbol of the 11 OFDM symbols, where when M is 1, the SL PRS symbol is an 8th symbol of the 11 OFDM symbols; or when M is 2, the SL PRS symbol includes a 7th symbol and the 8th symbol of the 11 OFDM symbols; or when M is 2, the SL PRS symbol includes a 5th symbol, a 6th symbol, a 7th symbol, and an 8th symbol of the 11 OFDM symbols;

the plurality of OFDM symbols are 10 OFDM symbols, the PSSCH DMRS symbol includes a 4th symbol and a 9th symbol of the 10 OFDM symbols, and the SL CSI-RS symbol is a 7th symbol of the 10 OFDM symbols, where when M is 1, the SL PRS symbol is an 8th symbol of the 10 OFDM symbols; or when M is 2, the SL PRS symbol includes a 5th symbol and a 6th symbol of the 10 OFDM symbols;

the plurality of OFDM symbols are 9 OFDM symbols, the PSSCH DMRS symbol includes a 2nd symbol and a 6th symbol of the 9 OFDM symbols, and the SL CSI-RS symbol is an 8th symbol of the 9 OFDM symbols, where when M is 1, the SL PRS symbol is a 7th symbol of the 9 OFDM symbols; or when M is 2, the SL PRS symbol includes a 4th symbol and a 5th symbol of the 9 OFDM symbols;

the plurality of OFDM symbols are 8 OFDM symbols, the PSSCH DMRS symbol includes a 2nd symbol and a 6th symbol of the 8 OFDM symbols, and the SL CSI-RS symbol is a 7th symbol of the 8 OFDM symbols, where when M is 1, the SL PRS symbol is a 5th symbol of the 8 OFDM symbols; or when M is 2, the SL PRS symbol includes a 4th symbol and a 5th symbol of the 8 OFDM symbols; or

the plurality of OFDM symbols are 7 OFDM symbols, the PSSCH DMRS symbol includes a 2nd symbol and a 6th symbol of the 7 OFDM symbols, and the SL CSI-RS symbol is a 4th symbol of the 7 OFDM symbols, where when M is 1, the SL PRS symbol is a 5th symbol of the 7 OFDM symbols, where the AGC symbol is the 1st symbol of the plurality of OFDM symbols, the PSCCH symbol includes the 2nd symbol and the 3rd symbol of the plurality of OFDM symbols, and the GAP symbol is the last symbol of the plurality of OFDM symbols.

In the foregoing implementation, when the plurality of OFDM symbols include the AGC symbol, the GAP symbol, the PSCCH symbol, the PSSCH DMRS symbol, the SL CSI-RS symbol, and the SL PRS symbol, for different quantities of the plurality of OFDM symbols and different values of M, the terminal device (for example, the first terminal device or the second terminal device) may determine the location of the SL PRS symbol of the plurality of OFDM symbols.

Based on the first aspect or the second aspect, in a possible implementation, the plurality of OFDM symbols may further include a sidelink phase tracking reference signal (sidelink phase tracking reference signal, SL PT-RS) symbol; and that the SL PRS symbol is the last M symbol other than the one or more symbols of the plurality of OFDM symbols may be specifically: The SL PRS symbol is the last M symbol other than the SL PT-RS symbol and the one or more symbols of the plurality of OFDM symbols. Optionally, the SL PT-RS symbol may be time-division multiplexed with the PSCCH symbol, and the SL PT-RS symbol may be further time-division multiplexed with the PSSCH DMRS symbol.

In the foregoing implementation, the SL PRS symbol may alternatively be different from the SL PT-RS symbol. For example, the SL PRS symbol may be the last M symbol other than the AGC symbol, the GAP symbol, the PSCCH symbol, the PSSCH DMRS symbol, and the SL PT-RS symbol of the plurality of OFDM symbols. For another example, the SL PRS symbol may alternatively be the last M symbol other than the AGC symbol, the GAP symbol, the PSCCH symbol, the PSSCH DMRS symbol, the SL CSI-RS symbol, and the SL PT-RS symbol of the plurality of OFDM symbols.

Based on the first aspect or the second aspect, in a possible implementation, when the plurality of OFDM symbols include the AGC symbol, the GAP symbol, the PSCCH symbol, the PSSCH DMRS symbol, the SL CSI-RS symbol, the SL PT-RS symbol, and the SL PRS symbol, the location of the SL PRS symbol of the plurality of OFDM symbols may be shown as follows:

The plurality of OFDM symbols are 14 OFDM symbols, the PSSCH DMRS symbol includes a $4^{th}$ symbol and an $11^{th}$ symbol of the 14 OFDM symbols, and the SL CSI-RS symbol is a $13^{th}$ symbol of the 14 OFDM symbols, where when M is 1, the SL PRS symbol is a $12^{th}$ symbol of the 14 OFDM symbols; or when M is 2, the SL PRS symbol includes a $9^{th}$ symbol and a $10^{th}$ symbol of the 14 OFDM symbols;

the plurality of OFDM symbols are 13 OFDM symbols, the PSSCH DMRS symbol includes a $4^{th}$ symbol and an $11^{th}$ symbol of the 13 OFDM symbols, and the SL CSI-RS symbol is a $12^{th}$ symbol of the 13 OFDM symbols, where when M is 1, the SL PRS symbol is a $10^{th}$ symbol of the 13 OFDM symbols; or when M is 2, the SL PRS symbol includes a $9^{th}$ symbol and a $10^{th}$ symbol of the 13 OFDM symbols;

the plurality of OFDM symbols are 12 OFDM symbols, the PSSCH DMRS symbol includes a $4^{th}$ symbol and an $11^{th}$ symbol of the 12 OFDM symbols, and the SL CSI-RS symbol is a $9^{th}$ symbol of the 12 OFDM symbols, where when M is 1, the SL PRS symbol is a $10^{th}$ symbol of the 12 OFDM symbols; or when M is 2, the SL PRS symbol includes a $6^{th}$ symbol and a $7^{th}$ symbol of the 12 OFDM symbols;

the plurality of OFDM symbols are 11 OFDM symbols, the PSSCH DMRS symbol includes a $4^{th}$ symbol and a $9^{th}$ symbol of the 11 OFDM symbols, and the SL CSI-RS symbol is a $10^{th}$ symbol of the 11 OFDM symbols, where when M is 1, the SL PRS symbol is a $7^{th}$ symbol of the 11 OFDM symbols; or when M is 2, the SL PRS symbol includes a $6^{th}$ symbol and a $7^{th}$ symbol of the 11 OFDM symbols; or

the plurality of OFDM symbols are 10 OFDM symbols, the PSSCH DMRS symbol includes a $4^{th}$ symbol and a $9^{th}$ symbol of the 10 OFDM symbols, and the SL CSI-RS symbol is a $7^{th}$ symbol of the 10 OFDM symbols, where when M is 1, the SL PRS symbol is a $6^{th}$ symbol of the 10 OFDM symbols; or when M is 2, the SL PRS symbol includes a $5^{th}$ symbol and the $6^{th}$ symbol of the 10 OFDM symbols, where the AGC symbol is the $1^{st}$ symbol of the plurality of OFDM symbols, the PSCCH symbol includes the $2^{nd}$ symbol and the $3^{rd}$ symbol of the plurality of OFDM symbols, the SL PT-RS symbol is the $8^{th}$ symbol of the plurality of OFDM symbols, and the GAP symbol is the last symbol of the plurality of OFDM symbols.

In the foregoing implementation, when the plurality of OFDM symbols include the AGC symbol, the GAP symbol, the PSCCH symbol, the PSSCH DMRS symbol, the SL CSI-RS symbol, the SL PT-RS symbol, and the SL PRS symbol, for different quantities of the plurality of OFDM symbols and different values of M, the terminal device (for example, the first terminal device or the second terminal device) may determine the location of the SL PRS symbol of the plurality of OFDM symbols.

Based on the first aspect or the second aspect, in a possible implementation, the plurality of OFDM symbols may further include a physical sidelink feedback channel (physical sidelink feedback channel, PSFCH) symbol; and that the SL PRS symbol is the last M symbol other than the one or more symbols of the plurality of OFDM symbols may be specifically: The SL PRS symbol is the last M symbol other than the PSFCH symbol and the one or more symbols of the plurality of OFDM symbols. Optionally, the PSFCH symbol may be the $2^{nd}$-to-last symbol of the plurality of OFDM symbols, or the PSFCH symbol may include the $2^{nd}$-to-last symbol and a $3^{rd}$-to-last symbol of the plurality of OFDM symbols.

In the foregoing implementation, the SL PRS symbol may alternatively be different from the PSFCH symbol. For example, the SL PRS symbol may be the last M symbol other than the AGC symbol, the GAP symbol, the PSCCH symbol, the PSSCH DMRS symbol, and the PSFCH symbol of the plurality of OFDM symbols. For another example, the SL PRS symbol may alternatively be the last M symbol other than the AGC symbol, the GAP symbol, the PSCCH symbol, the PSSCH DMRS symbol, the SL CSI-RS symbol, and the PSFCH symbol of the plurality of OFDM symbols. For another example, the SL PRS symbol may alternatively be the last M symbol other than the AGC symbol, the GAP symbol, the PSCCH symbol, the PSSCH DMRS symbol, the SL PT-RS symbol, and the PSFCH symbol of the plurality of OFDM symbols. For another example, the SL PRS symbol may alternatively be the last M symbol other than the AGC symbol, the GAP symbol, the PSCCH symbol, the PSSCH DMRS symbol, the SL CSI-RS symbol, the SL PT-RS symbol, and the PSFCH symbol of the plurality of OFDM symbols.

Based on the first aspect or the second aspect, in a possible implementation, the plurality of OFDM symbols are 14 OFDM symbols, and when the 14 OFDM symbols include the AGC symbol, the GAP symbol, the PSCCH symbol, the PSSCH DMRS symbol, the SL CSI-RS symbol, the PSFCH symbol, and the SL PRS symbol, the location of the SL PRS symbol of the 14 OFDM symbols may be shown as follows:

M is 1, and the SL PRS symbol is a $9^{th}$ symbol of the 14 OFDM symbols;
M is 2, and the SL PRS symbol includes an $8^{th}$ symbol and a $9^{th}$ symbol of the 14 OFDM symbols; or
M is 4, and the SL PRS symbol includes a $6^{th}$ symbol, a $7^{th}$ symbol, an $8^{th}$ symbol, and a $9^{th}$ symbol of the 14 OFDM symbols, where
the AGC symbol is a $1^{st}$ symbol of the 14 OFDM symbols, the PSCCH symbol includes a $2^{nd}$ symbol and a $3^{rd}$ symbol of the 14 OFDM symbols, the PSSCH DMRS symbol is a $4^{th}$ symbol and an $11^{th}$ symbol of the 14 OFDM symbols, the SL CSI-RS symbol is a $10^{th}$ symbol of the 14 OFDM symbols, the PSFCH symbol includes a $12^{th}$ symbol and a $13^{th}$ signal of the 14 OFDM symbols, and the GAP symbol is a last symbol of the 14 OFDM symbols.

In the foregoing implementation, when the plurality of OFDM symbols include the AGC symbol, the GAP symbol, the PSCCH symbol, the PSSCH DMRS symbol, the SL CSI-RS symbol, the PSFCH symbol, and the SL PRS symbol, for different values of M, the terminal device (for example, the first terminal device or the second terminal device) may determine the location of the SL PRS symbol of the plurality of OFDM symbols.

Based on the first aspect or the second aspect, in a possible implementation, the plurality of OFDM symbols are 14 OFDM symbols, and when the 14 OFDM symbols include the AGC symbol, the GAP symbol, the PSCCH symbol, the PSSCH DMRS symbol, the SL CSI-RS symbol, the SL PT-RS symbol, the PSFCH symbol, and the SL PRS symbol, the location of the SL PRS symbol of the 14 OFDM symbols may be shown as follows:

M is 1, and the SL PRS symbol is a $9^{th}$ symbol of the 14 OFDM symbols; or
M is 2, and the SL PRS symbol includes a $6^{th}$ symbol and a $7^{th}$ symbol of the 14 OFDM symbols, where
the AGC symbol is a $1^{st}$ symbol of the 14 OFDM symbols, the PSCCH symbol includes a $2^{nd}$ symbol and a $3^{rd}$ symbol of the 14 OFDM symbols, the PSSCH DMRS symbol includes a $4^{th}$ symbol and an $11^{th}$ symbol of the 14 OFDM symbols, the SL PT-RS symbol is an $8^{th}$ symbol of the 14 OFDM symbols, the SL CSI-RS symbol is a $10^{th}$ symbol of the 14 OFDM symbols, the PSFCH symbol includes a $12^{th}$ symbol and a $13^{th}$ signal of the 14 OFDM symbols, and the GAP symbol is a last symbol of the 14 OFDM symbols.

In the foregoing implementation, when the plurality of OFDM symbols include the AGC symbol, the GAP symbol, the PSCCH symbol, the PSSCH DMRS symbol, the SL CSI-RS symbol, the SL PT-RS symbol, the PSFCH symbol, and the SL PRS symbol, for different values of M, the terminal device (for example, the first terminal device or the second terminal device) may determine the location of the SL PRS symbol of the plurality of OFDM symbols.

Based on the first aspect or the second aspect, in a possible implementation, that the SL PRS symbol is the last M symbol other than the one or more symbols of the plurality of OFDM symbols may specifically be: The SL PRS symbol is M symbols obtained by offsetting the last M symbols by X symbols, the M symbol obtained by offsetting the last M symbols by the X symbols belong to symbols other than the one or more symbols of the plurality of OFDM symbols, and X is a positive integer.

In the foregoing implementation, the location of the SL PRS symbol of the plurality of OFDM symbols may be obtained by offsetting the last M symbol by the X symbol.

Based on the first aspect or the second aspect, in a possible implementation, the plurality of OFDM symbols are 14 OFDM symbols, the 14 OFDM symbols include the AGC symbol, the GAP symbol, the PSCCH symbol, the PSSCH DMRS symbol, the SL CSI-RS symbol, and the SL PRS symbol, and when X is 2, the location of the SL PRS symbol of the 14 OFDM symbols may be shown as follows:

M is 1, and the SL PRS symbol is a $10^{th}$ symbol of the 14 OFDM symbols;
M is 2, and the SL PRS symbol includes a $7^{th}$ symbol and an $8^{th}$ symbol of the 14 OFDM symbols; or
M is 4, and the SL PRS symbol includes a $5^{th}$ symbol, a $6^{th}$ symbol, a $7^{th}$ symbol, and an $8^{th}$ symbol of the 14 OFDM symbols, where
the AGC is a $1^{st}$ symbol of the 14 OFDM, the GAP symbol is a last symbol of the 14 OFDM symbols, the PSCCH symbol includes a $2^{nd}$ symbol and a $3^{rd}$ symbol of the 14 OFDM symbols, the PSSCH DMRS symbol includes a $4^{th}$ symbol and an $11^{th}$ symbol of the 14 OFDM symbols, and the SL CSI-RS symbol is a $13^{th}$ symbol of the 14 OFDM symbols.

In the foregoing implementation, when the plurality of OFDM symbols include the AGC symbol, the GAP symbol, the PSCCH symbol, the PSSCH DMRS symbol, the SL CSI-RS symbol, and the SL PRS symbol, and X is 2, for different values of M, the terminal device (for example, the first terminal device or the second terminal device) may determine the location of the SL PRS symbol of the plurality of OFDM symbols.

Based on the first aspect or the second aspect, in a possible implementation, the terminal device (for example, the first terminal device or the second terminal device) may further receive second information, where the second information indicates X. In this way, the terminal device (for example, the first terminal device or the second terminal device) may determine a value of X.

Based on the first aspect or the second aspect, in a possible implementation, the terminal device (for example, the first terminal device or the second terminal device) may further receive third information, where the third information indicates M. In this way, the terminal device (for example, the first terminal device or the second terminal device) may determine a value of M.

Based on the first aspect or the second aspect, in a possible implementation, the third information may indicate M in the following manner: The third information indicates a pattern between M and N, and the pattern between M and N indicates M, where N is a quantity of combs of an SL PRS, the SL PRS is carried by the SL PRS, and N is a positive integer.

In the foregoing implementation, the third information may directly indicate M, or may indirectly indicate M through the pattern between M and N. This implementation is flexible.

Based on the first aspect or the second aspect, in a possible implementation, the third information may be an identifier of a time domain resource of the SL PRS.

Based on the first aspect or the second aspect, in a possible implementation, a maximum quantity of time domain resources of the SL PRS is determined based on M and a symbol available for the SL PRS; a maximum quantity of time domain resources of the SL PRS is determined based on the pattern between M and N and a symbol available for the SL PRS; a maximum quantity of time domain resources of the SL PRS is determined based on M, a quantity of the plurality of OFDM symbols, and a pattern of the one or more symbols; a maximum quantity of time domain resources of the SL PRS is determined based on the pattern between M and N, a quantity of the plurality of OFDM symbols, and a pattern of the one or more symbols; a maximum quantity of time domain resources of the SL PRS is determined based on M, a symbol available for the SL PRS, and X; a maximum quantity of time domain resources of the SL PRS is determined based on the pattern between M and N, a symbol available for the SL PRS, and X; a maximum quantity of time domain resources of the SL PRS is determined based on M, a quantity of the plurality of OFDM symbols, a pattern of the one or more symbols, and X; or a maximum quantity of time domain resources of the SL PRS is determined based on the pattern between M and N, a quantity of the plurality of OFDM symbols, a pattern of the one or more symbols, and X, where the SL PRS is carried by the SL PRS, N is the quantity of combs of the SL PRS, X is an offset of the SL PRS symbol, the symbol available for the SL PRS symbol is the symbol other than the one or more symbols of the plurality of OFDM symbols, and both N and X are positive integers.

In the foregoing implementation, the terminal device (for example, the first terminal device or the second terminal device) may determine the maximum quantity of time domain resources of the SL PRS in a plurality of manners. This implementation is flexible.

According to a third aspect, this application provides a communication apparatus. The communication apparatus is configured to perform the method according to any one of the first aspect and the possible implementations of the first aspect. The communication apparatus is, for example, a first terminal device, or a functional module in a first terminal device, for example, a baseband apparatus or a chip system.

In a possible implementation, the communication apparatus includes the baseband apparatus and a radio frequency apparatus.

In another possible implementation, the communication apparatus includes a processing module (also referred to as a processing unit sometimes) and a transceiver module (also referred to as a transceiver unit sometimes). The transceiver module can implement a sending function and a receiving function. When the transceiver module implements the sending function, the transceiver module may be referred to as a sending module (also referred to as a sending unit sometimes). When the transceiver module implements the receiving function, the transceiver module may be referred to as a receiving module (also referred to as a receiving unit sometimes). The sending module and the receiving module may be a same functional module, the functional module is referred to as a transceiver module, and the functional module can implement the sending function and the receiving function. Alternatively, the sending module and the receiving module may be different functional modules, and the transceiver module is a general term for these functional modules.

According to a fourth aspect, this application provides a communication apparatus. The communication apparatus is configured to perform the method according to any one of the second aspect and the possible implementations of the second aspect. The communication apparatus is, for example, a second terminal device, or a functional module in a second terminal device, for example, a baseband apparatus or a chip system.

In a possible implementation, the communication apparatus includes the baseband apparatus and a radio frequency apparatus.

In another possible implementation, the communication apparatus includes a processing module (also referred to as a processing unit sometimes) and a transceiver module (also referred to as a transceiver unit sometimes). The transceiver module can implement a sending function and a receiving function. When the transceiver module implements the sending function, the transceiver module may be referred to as a sending module (also referred to as a sending unit sometimes). When the transceiver module implements the receiving function, the transceiver module may be referred to as a receiving module (also referred to as a receiving unit sometimes). The sending module and the receiving module may be a same functional module, the functional module is referred to as a transceiver module, and the functional module can implement the sending function and the receiving function. Alternatively, the sending module and the receiving module may be different functional modules, and the transceiver module is a general term for these functional modules.

According to a fifth aspect, this application further provides a communication apparatus. The communication apparatus may include at least one processor. Optionally, the communication apparatus may further include a memory. The memory is configured to store one or more computer programs or instructions. The at least one processor is configured to execute the one or more computer programs or the instructions stored in the memory, to enable the communication apparatus to perform the method according to any one of the first aspect or the second aspect and the possible implementations of the first aspect or the second aspect.

According to a sixth aspect, this application further provides a chip system. The chip system may include at least one processor. Optionally, the at least one processor is coupled to a memory. The at least one processor is configured to execute one or more computer programs or instructions in the memory, to implement the method according to any one of the first aspect or the second aspect and the possible implementations of the first aspect or the second aspect. Optionally, the chip system may include a chip, or may include a chip and another discrete component. Optionally, the chip system may also include a memory.

According to a seventh aspect, this application further provides a communication system. The communication system includes one or more of the following: the communication apparatus according to the third aspect or the communication apparatus according to the fourth aspect.

According to an eighth aspect, this application further provides a computer-readable storage medium. The computer-readable storage medium is configured to store a computer program or instructions. When the computer program or the instructions are run, the method in any one of the first aspect or the second aspect and the possible implementations of the first aspect or the second aspect is implemented.

According to a ninth aspect, this application further provides a computer program product including instructions. When the computer program product is run on a computer, the method in any one of the first aspect or the second aspect and the possible implementations of the first aspect or the second aspect is implemented.

For technical effects that can be achieved in any one of the third aspect to the ninth aspect and the possible implementations of the third aspect to the ninth aspect, correspondingly refer to the technical effects that can be achieved in any one of the first aspect or the second aspect and the possible implementations of the first aspect or the second aspect. Details are not described herein again.

BRIEF DESCRIPTION OF DRAWINGS

FIG. 1 is a diagram of an architecture of a communication system to which embodiments of this application are applicable;
FIG. 2 is a diagram of a location of an SL PRS symbol;
FIG. 3 is a schematic flowchart of a communication method according to an embodiment of this application;
FIG. 4 is a diagram of a location of an SL PRS symbol according to an embodiment of this application;
FIG. 5 is a diagram of a location of an SL PRS symbol according to an embodiment of this application;
FIG. 6 is a diagram of a location of an SL PRS symbol according to an embodiment of this application;
FIG. 7 is a diagram of a location of an SL PRS symbol according to an embodiment of this application;
FIG. 8 is a diagram of a location of another SL PRS symbol according to an embodiment of this application;
FIG. 9 is a diagram of a location of another SL PRS symbol according to an embodiment of this application;
FIG. 10 is a diagram of a location of another SL PRS symbol according to an embodiment of this application;
FIG. 11 is a diagram of a location of another SL PRS symbol according to an embodiment of this application;
FIG. 12 is a diagram of a location of another SL PRS symbol according to an embodiment of this application;
FIG. 13 is a diagram of a location of another SL PRS symbol according to an embodiment of this application;
FIG. 14 is a diagram of a location of still another SL PRS symbol according to an embodiment of this application;
FIG. 15 is a diagram of a location of still another SL PRS symbol according to an embodiment of this application;
FIG. 16 is a diagram of a location of still another SL PRS symbol according to an embodiment of this application;
FIG. 17 is a diagram of a location of still another SL PRS symbol according to an embodiment of this application;

FIG. 18 is a diagram of a location of still another SL PRS symbol according to an embodiment of this application;

FIG. 19 is a diagram of a location of still another SL PRS symbol according to an embodiment of this application;

FIG. 20 is a diagram of a structure of a communication apparatus according to an embodiment of this application;

FIG. 21 is a diagram of a structure of another communication apparatus according to an embodiment of this application; and

FIG. 22 is a diagram of a structure of still another communication apparatus according to an embodiment of this application.

## DESCRIPTION OF EMBODIMENTS

Embodiments of this application are presented around a system including a plurality of devices, components, modules, and the like. It should be understood that, the system may include other devices, components, modules, and the like that are not mentioned, or may include only some devices, components, modules, and the like that are mentioned in embodiments.

Embodiments of this application provide a communication method and apparatus, to determine a location of an SL PRS symbol, so as to improve SL positioning performance. The method and the apparatus in this application are based on a same technical concept. Because problem-resolving principles of the method and the apparatus are similar, mutual reference may be made to implementation of the apparatus and the method, and repeated parts are not described.

In embodiments of this application, "a plurality of" may mean two or more. In view of this, in embodiments of this application, "a plurality of" may alternatively be understood as "at least two". "At least one" may be understood as one or more, for example, one, two, or more. For example, "including at least one" means including one, two, or more, for example, including at least one of A, B, and C. In this case, A, B, C, A and B, A and C, B and C, or A, B and C may be included. "And/or" describes an association relationship between associated objects and three relationships may specifically exist. For example, A and/or B may represent the following three cases: Only A exists, both A and B exist, and only B exists. In addition, the character "/", unless otherwise specified, generally indicates an "or" relationship between the associated objects.

In addition, the terms "system" and "network" in embodiments of this application may be used interchangeably, and "according to" and "based on" may be used interchangeably.

Ordinal numerals such as "first" and "second" in embodiments of this application are used to distinguish between different objects, and are not intended to limit a sequence, a time sequence, a priority, or an importance degree of a plurality of objects. For example, a first terminal device and a second terminal device are configured to distinguish between different terminal devices, and do not limit a priority or an importance degree of a combination of the two terminal devices.

To make objectives, technical solutions, and advantages of embodiments of this application clearer, the following further describes embodiments of this application in detail with reference to the accompanying drawings.

Technical solutions provided in embodiments of this application are mainly applicable to a wireless communication system. The wireless communication system may comply with a wireless communication standard of the 3rd generation partnership project (3rd generation partnership project, 3GPP). For example, the solutions provided in embodiments of this application may be applied to a 4th generation (4th generation, 4G) communication system, for example, a long term evolution (long term evolution, LTE) communication system, may be applied to a 5th generation (5th generation, 5G) communication system, for example, a 5G new radio (new radio, NR) communication system, or may be applied to various future communication systems, for example, a 6th generation (6th generation, 6G) communication system. Alternatively, the technical solutions provided in embodiments of this application may comply with another wireless communication standard, for example, a wireless communication standard of the Institute of Electrical and Electronics Engineers (Institute of Electrical and Electronics Engineers, IEEE) 802 series (for example, 802.11, 802.15, or 802.20).

The method provided in embodiments of this application may be further applied to a Bluetooth system, a wireless high-fidelity (wireless fidelity, Wi-Fi) system, a long range radio (Long Range Radio, LoRa) system, or a vehicle to everything (vehicle to everything, V2X) system. The method provided in embodiments of this application may be further applied to a satellite communication system, and the satellite communication system may be integrated with the foregoing communication system.

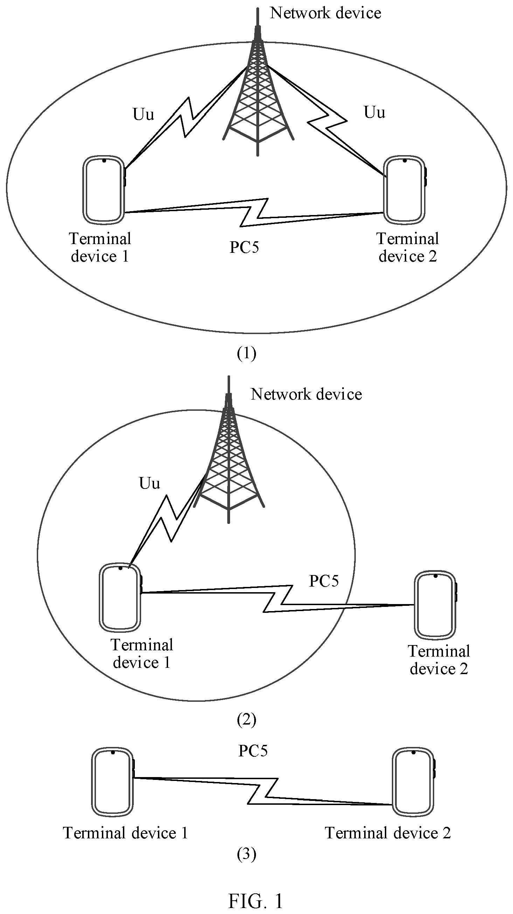

A network architecture and an application scenario described in embodiments of this application are intended to describe the technical solutions in embodiments of this application more clearly, and do not constitute a limitation to the technical solutions provided in embodiments of this application. A person of ordinary skill in the art may know: With evolution of the network architecture and emergence of new application scenarios, the technical solutions provided in embodiments of this application are also applicable to similar technical problems. In embodiments of this application, the communication system shown in FIG. 1 is used as an example for description. When the technical solutions in embodiments of this application are applied to another communication system, a device, a component, a module, and the like in the embodiments may be replaced with a corresponding device, component, and module in the another communication system. This is not limited.

FIG. 1 shows an example of a diagram of an architecture of several possible communication systems to which embodiments of this application are applicable. In FIG. 1, two terminal devices (denoted as a terminal device 1 and a terminal device 2) and one network device are used as an example for description. The communication system may further include more terminal devices and network devices.

(1) in FIG. 1 shows an architecture in coverage of the network device. A connection may be established between terminal devices through a proximity communication 5 (proximity communication, PC5) interface, and each terminal device separately establishes a connection to the network device (for example, a base station). It should be understood that, the terminal devices may be connected to a same network device, or may be connected to different network devices. In (1) in FIG. 1, an example in which the terminal device 1 and the terminal device 2 are connected to the same network device is used for illustration. In embodiments of this application, a connection may be established between the terminal device and the network station through a Uu interface.

(2) in FIG. 1 shows an architecture in a part of coverage of the network device. A connection may be established between terminal devices through a PC5 interface, a part of terminal devices do not establish a connection with the network device (for example, a base station), and a remaining part of terminal devices establish a connection with the network device (for example, the base station). In (2) in FIG. 1, an example in which the terminal device 1 establishes a connection with the network device, and the terminal device 2 does not establish a connection with the network device is used for illustration.

(3) in FIG. 1 shows an architecture outside coverage of the network device. A connection may be established between terminal devices through a PC5 interface, and no terminal device establishes a connection with the network device.

In FIG. 1, after the connection is established between the terminal devices, the terminal devices may directly communicate with each other through a sidelink (sidelink, SL).

For example, the network device may include an access network device and/or a core network device. Unless otherwise specified, the network device in this embodiment of this application is the access network device. The network device may also be referred to as the access network device, an access network element, a network apparatus, a radio access network (radio access network, RAN) entity, a RAN node, an access node, or the like, to help the terminal device implement radio access. Optionally, the RAN may be a 3GPP-related cellular system, for example, a 4G mobile communication system (for example, an LTE system), a 5G mobile communication system (for example, an NR system), or a future-oriented evolved system (for example, a 6G mobile communication system). The RAN may alternatively be an open access network (open RAN, O-RAN or ORAN), a cloud radio access network (cloud radio access network, CRAN), or a wireless fidelity (wireless fidelity, Wi-Fi) system. Alternatively, the RAN may be a communication system that integrates two or more of the foregoing systems.

In a possible scenario, the network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The network device may alternatively be a macro base station, a micro base station or an indoor base station, a relay node or a donor node, or a radio controller in a CRAN scenario. Optionally, the network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes coordinate to assist a terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city.

The terminal device may also be referred to as a terminal, a terminal apparatus, user equipment (user equipment, UE), a mobile station, a mobile terminal, or the like. The terminal device may be widely used in various scenarios, for example, device-to-device (device-to-device, D2D) communication, vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, a smart wearable, smart transportation, and a smart city. For example, the terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal device is not limited in embodiments of this application.

In this embodiment of this application, a function of the terminal device may also be performed by a module (for example, a chip or a modem) in the terminal, or may be performed by an apparatus including a terminal function.

The network device and the terminal device may be fixed at a location, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

The following describes technical features in embodiments of this application.

SL positioning and SL communication share a resource pool, which may be understood as that, SL positioning and SL communication may use the same resource pool in a time division multiplexing manner or a frequency division multiplexing manner. Currently, for SL positioning and SL communication sharing the resource pool, in one slot, a sidelink positioning reference signal (sidelink positioning reference signal, SL PRS) symbol is different from an automatic gain control (automatic gain control, AGC) symbol, a gap (GAP) symbol, a physical sidelink control channel (physical sidelink control channel, PSCCH) symbol, and a physical sidelink shared channel (physical sidelink shared channel, PSSCH) demodulation reference signal (demodulation reference signal, DMRS) symbol, and an SL PRS occupies M consecutive symbols.

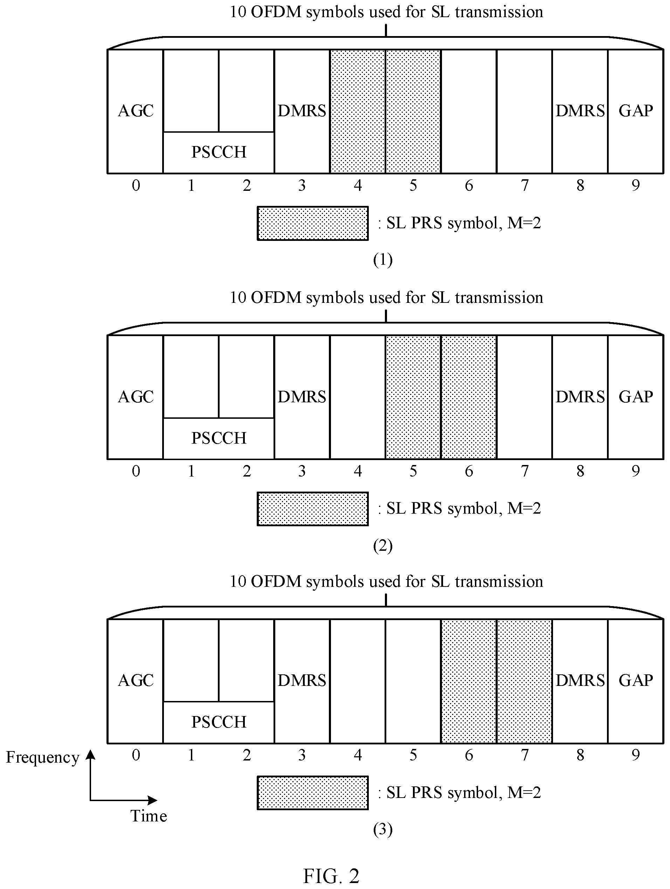

For example, it is assumed that a value of M is 2, a quantity of orthogonal frequency division multiplexing (orthogonal frequency division multiplexing, OFDM) symbols used for SL transmission in one slot is 10, and the 10 OFDM symbols include the AGC symbol, the GAP symbol, the PSCCH symbol, the PSSCH DMRS symbol, and the SL PRS symbol. The AGC symbol is a $1^{st}$ symbol of the 10 symbols, the PSCCH symbol includes a $2^{nd}$ symbol and a $3^{rd}$ symbol of the 10 symbols, the PSSCH DMRS symbol includes a $4^{th}$ symbol and a $9^{th}$ symbol of the 10 symbols, and the GAP symbol is a last symbol of the 10 symbols. Because the SL PRS symbol is different from the AGC symbol, the PSCCH symbol, and the PSSCH DMRS symbol, in an implementation, the SL PRS symbol may include a $5^{th}$ symbol and a $6^{th}$ symbol of the 10 symbols, as shown in (1) in FIG. 2. Alternatively, in another implementation, the SL PRS symbol may include a $6^{th}$ symbol and a $7^{th}$ symbol of the 10 symbols, as shown in (2) in FIG. 2. Alternatively, in another implementation, the SL PRS symbol may include a $7^{th}$ symbol and an $8^{th}$ symbol of the 10 symbols, as shown in (3) in FIG. 2. It can be learned that, in a current implementation, there are a plurality of possibilities of a location of the SL PRS symbol, and as a result, a terminal device cannot determine the location of the SL PRS symbol, which affects SL positioning performance.

In view of this, embodiments of this application provide a communication method and apparatus, to determine the location of the SL PRS symbol, so as to improve the SL positioning performance. The method may be applied to the communication system shown in FIG. 1. This is not limited. For ease of understanding, the method is shown by using an example in which execution bodies are a first terminal device and a second terminal device. The first terminal device may be the terminal device in FIG. 1, or a unit, a module, or a chip (system) in the terminal device. The second terminal device may be the terminal device in FIG. 1, or a unit, a module, or a chip (system) in the terminal device. For example, the first terminal device may be the terminal device 1 in FIG. 1, and the second terminal device may be the terminal device 2 in FIG. 1; or the first terminal device may be the terminal device 2 in FIG. 1, and the second terminal device may be the terminal device 1 in FIG. 1.

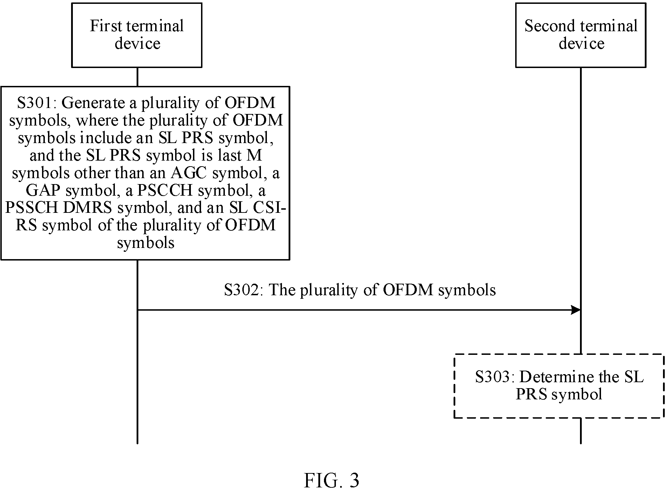

FIG. 3 shows an example of a schematic flowchart of a communication method according to an embodiment of this application. As shown in FIG. 3, the method may include the following content.

S301: A first terminal device generates a plurality of OFDM symbols.

The plurality of OFDM symbols include an SL PRS symbol. The SL PRS symbol may be used for SL positioning. The plurality of OFDM symbols are symbols used for SL transmission (or SL communication) in one slot. A quantity of the plurality of OFDM symbols may be greater than or equal to 7 and less than or equal to 14. For example, the quantity (or a count, or a number, or the like) of the plurality of OFDM symbols may be configured by using higher layer signaling, for example, configured by using sl-LengthSymbols. This is not limited. For ease of description, the quantity of the plurality of OFDM symbols may be denoted as Y, and Y may be an integer greater than or equal to 7 and less than or equal to 14. Correspondingly, S301 may be replaced with: The first terminal device generates Y OFDM symbols. In the following, the terms the " plurality of OFDM symbols" and the "Y OFDM symbols" are used interchangeably. "Configured by using higher layer signaling" may be understood as configured by a network device.

The plurality of OFDM symbols may further include one or more of the following symbols in addition to the SL PRS symbol: an AGC symbol, a GAP symbol, a PSCCH symbol, a PSSCH DMRS symbol, or an SL CSI-RS symbol. The SL PRS symbol is last M symbols other than the one or more symbols of the plurality of OFDM symbols. That the SL PRS symbol is the last M symbols other than the one or more symbols of the plurality of OFDM symbols may be understood as: The SL PRS symbol is M symbols, counted frontward (or leftward) from a last symbol of remaining symbols, other than the one or more symbols of the plurality of OFDM symbols.

M is a positive integer. In addition, when M is greater than 1, the M symbols are M consecutive symbols, that is, the SL PRS symbol are the M consecutive symbols. Correspondingly, that the SL PRS symbol is the last M symbols other than the one or more symbols of the plurality of OFDM symbols may be replaced with: The SL PRS symbol is the last M consecutive symbols other than the one or more symbols of the plurality of OFDM symbols. For example, M may be 1, 2, 4, or the like. This is not limited.

It should be noted that, that the first terminal device generates the plurality of OFDM symbols may be replaced with: The first terminal device maps an SL PRS to the M symbols of the plurality of OFDM symbols, where the plurality of OFDM symbols include the one or more symbols, and the M symbols are the last M symbols other than the one or more symbols of the plurality of OFDM symbols; or may be replaced with: The first terminal device maps fourth information to the plurality of OFDM symbols, where the fourth information includes an SL PRS, the fourth information may further include one or more of the following information: AGC, a GAP, a PSCCH, a PSSCH DMRS, or an SL CSI-RS, and the SL PRS occupies last M symbols other than a symbol to which the one or more pieces of information is mapped (or that the one or more pieces of information occupies or used for the one or more pieces of information) of the plurality of OFDM symbols.

In an implementation, M may be preconfigured, or may be indicated (or configured) by using third information. This is not limited. The third information may be, for example, higher layer signaling, or may be sidelink control information (sidelink control information, SCI). This is not limited. For example, the first terminal device (or a second terminal device) may receive the third information, where the third information indicates (or is used for configuring) M. The third information may directly indicate M, or may indirectly indicate M. This is not limited. For example, the third information may indicate a graphical pattern (or a pattern (pattern), a legend, or the like) between M and N, and the pattern between M and N may indicate M. N is a quantity of combs of the SL PRS, and N is a positive integer. In this way, the first terminal device (or the second terminal device) may determine M based on the pattern between M and N. For another example, the third information may be an identifier of a time domain resource of the SL PRS (for example, an SL PRS Resource ID). The identifier of the time domain resource of the SL PRS may indicate M, and/or the identifier of the time domain resource of the SL PRS may indicate the pattern between M and N. The time domain resource of the SL PRS may be understood as a location of the SL PRS symbol. The SL PRS is carried by the SL PRS symbol, or the SL PRS is mapped to the SL PRS symbol. Optionally, the third information may further indicate a location of a start symbol of the SL PRS.

The following describes the one or more symbols that are further included in the plurality of OFDM symbols.

(1) The AGC symbol may be used by a receive end to adjust an operating point, so that a gain of an amplification circuit is automatically adjusted with signal strength. For example, the AGC symbol may be a 1st symbol of the plurality of OFDM symbols.

(2) The GAP symbol is a time interval, and is used for receive/transmit conversion. For example, the GAP symbol may be a last symbol of the plurality of OFDM symbols, or the GAP symbol may be a Yth symbol (or a last symbol) of the Y OFDM symbols.

(3) The PSCCH symbol may be used for transmission of the SCI. For example, a quantity of PSCCH symbols may be 2 or 3. The quantity of PSCCH symbols may be configured by using higher layer signaling, for example, configured by using sl-TimeResourcePSCCH. This is not limited. For example, the PSCCH symbol may include a 2nd symbol and a 3rd symbol of the plurality of OFDM symbols. For another example, the PSCCH symbol may include a 2nd symbol, a 3rd symbol, and a 4th symbol of the plurality of OFDM symbols.

(4) The PSSCH DMRS symbol may be used to demodulate a PSSCH. For example, a quantity of PSSCH DMRS symbols may be 2, 3, or 4. A location (or a sequence number) of the PSSCH DMRS symbol may be configured by using higher layer signaling, for example, configured by using sl-PSSCH-DMRS-TimePatternList. This is not limited. For example, the PSSCH DMRS symbol may include the 2nd symbol and a 6th symbol of the plurality of OFDM symbols; or the PSSCH DMRS symbol may include the 4th symbol and a 9th symbol of the plurality of OFDM symbols; or the PSSCH DMRS symbol may include the 4th symbol and an 11th symbol of the plurality of OFDM symbols; or the PSSCH DMRS symbol may include a 5th symbol and a 9th symbol of the plurality of OFDM symbols; or the PSSCH DMRS symbol may include a 5th symbol and an 11th symbol of the plurality of OFDM symbols; or the PSSCH DMRS symbol may alternatively include the 2nd symbol, a 5th symbol, and an 8th symbol of the plurality of OFDM symbols; or the PSSCH DMRS symbol may alternatively include the 2nd symbol, a 6th symbol, and a 10th symbol of the plurality of OFDM symbols; or the PSSCH DMRS symbol may alternatively include the 2nd symbol, a 7th symbol, and a 12th symbol of the plurality of OFDM symbols; or the PSSCH DMRS symbol may alternatively include the 2nd symbol, a 5th symbol, an 8th symbol, and an 11th symbol of the plurality of OFDM symbols, as shown in Table 1. Table 1 shows an example of the location (the sequence number or an index) of the PSSCH DMRS symbol. Table 1 is shown by using an example in which indexes of the OFDM symbols are numbered from 0. In other words, an index of the 2nd symbol of the plurality of OFDM symbols is 1, an index of the 6th symbol of the plurality of OFDM symbols is 5, and the rest is deduced by analogy. Details are not listed one by one. In addition, in Table 1, $I_d$=Y-1. $I_d$ OFDM symbols may be understood as remaining symbols other than the GAP symbol of the plurality of OFDM symbols.

Table 1

| $I_d$ | Location (or index) of a PSSCH DMRS symbol | | | | | |
|---|---|---|---|---|---|---|
| | Quantity of PSCCH symbols is 2 | | | Quantity of PSCCH symbols is 3 | | |
| | Quantity of PSSCH DMRS symbols | | | Quantity of PSSCH DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

For example, the plurality of OFDM symbols may include the AGC symbol, the GAP symbol, the PSCCH symbol, and the PSSCH DMRS symbol. The GAP symbol is the last symbol of the plurality of OFDM symbols. The AGC symbol, the PSCCH symbol, and the PSSCH DMRS symbol include the first three symbols (to be specific, the 1st symbol, the 2nd symbol, and the 3rd symbol) and the 6th symbol of the plurality of OFDM symbols. For example, the AGC symbol is the 1st symbol of the plurality of OFDM symbols, the PSCCH symbol includes the 2nd symbol and the 3rd symbol of the plurality of OFDM symbols, and the PSSCH DMRS symbol may include the 2nd symbol and the 6th symbol of the plurality of OFDM symbols.

Alternatively, the AGC symbol, the PSCCH symbol, and the PSSCH DMRS symbol include the first four symbols (to be specific, the 1st symbol, the 2nd symbol, the 3rd symbol, and the 4th symbol) and the 9th symbol of the plurality of OFDM symbols. For example, the AGC symbol is the 1st symbol of the plurality of OFDM symbols, the PSCCH symbol includes the 2nd symbol and the 3rd symbol of the plurality of OFDM symbols, and the PSSCH DMRS symbol may include the 4th symbol and the 9th symbol of the plurality of OFDM symbols.

Alternatively, the AGC symbol, the PSCCH symbol, and the PSSCH DMRS symbol include the first four symbols (to be specific, the 1st symbol, the 2nd symbol, the 3rd symbol, and the 4th symbol) and the 11th symbol of the plurality of OFDM symbols. For example, the AGC symbol is the 1st symbol of the plurality of OFDM symbols, the PSCCH symbol includes the 2nd symbol and the 3rd symbol of the plurality of OFDM symbols, and the PSSCH DMRS symbol may include the 4th symbol and the 11th symbol of the plurality of OFDM symbols.

Alternatively, the AGC symbol, the PSCCH symbol, and the PSSCH DMRS symbol include the first three symbols (to be specific, the 1st symbol, the 2nd symbol, and the 3rd symbol), the 5th symbol, and the 8th symbol of the plurality of OFDM symbols. For example, the AGC symbol is the 1st symbol of the plurality of OFDM symbols, the PSCCH symbol includes the 2nd symbol and the 3rd symbol of the plurality of OFDM symbols, and the PSSCH DMRS symbol may include the 2nd symbol, the 5th symbol, and the 8th symbol of the plurality of OFDM symbols.

Alternatively, the AGC symbol, the PSCCH symbol, and the PSSCH DMRS symbol include the first three symbols (to be specific, the 1st symbol, the 2nd symbol, and the 3rd symbol), the 6th symbol, and the 10th symbol of the plurality of OFDM symbols. For example, the AGC symbol is the 1st symbol of the plurality of OFDM symbols, the PSCCH symbol includes the 2nd symbol and the 3rd symbol of the plurality of OFDM symbols, and the PSSCH DMRS symbol may include the 2nd symbol, the 6th symbol, and the 10th symbol of the plurality of OFDM symbols.

Alternatively, the AGC symbol, the PSCCH symbol, and the PSSCH DMRS symbol include the first three symbols (to be specific, the 1st symbol, the 2nd symbol, and the 3rd symbol), the 7th symbol, and the 12th symbol of the plurality of OFDM symbols. For example, the AGC symbol is the 1st symbol of the plurality of OFDM symbols, the PSCCH symbol includes the 2nd symbol and the 3rd symbol of the plurality of OFDM symbols, and the PSSCH DMRS symbol may include the 2nd symbol, the 7th symbol, and the 12th symbol of the plurality of OFDM symbols.

Alternatively, the AGC symbol, the PSCCH symbol, and the PSSCH DMRS symbol include the first three symbols (to be specific, the 1st symbol, the 2nd symbol, and the 3rd symbol), the 5th symbol, the 8th symbol, and the 11th symbol of the plurality of OFDM symbols. For example, the AGC symbol is the 1st symbol of the plurality of OFDM symbols, the PSCCH symbol includes the 2nd symbol and the 3rd symbol of the plurality of OFDM symbols, and the PSSCH DMRS symbol may include the 2nd symbol, the 5th symbol, the 8th symbol, and the 11th symbol of the plurality of OFDM symbols.

Alternatively, the AGC symbol, the PSCCH symbol, and the PSSCH DMRS symbol include the first four symbols (to be specific, the 1st symbol, the 2nd symbol, the 3rd symbol, and the 4th symbol) and the 6th symbol of the plurality of OFDM symbols. For example, the AGC symbol is the 1st symbol of the plurality of OFDM symbols, the PSCCH symbol includes the 2nd symbol, the 3rd symbol, and the 4th symbol of the plurality of OFDM symbols, and the PSSCH DMRS symbol may include the 2nd symbol and the 6th symbol of the plurality of OFDM symbols.

Alternatively, the AGC symbol, the PSCCH symbol, and the PSSCH DMRS symbol include the first five symbols (to be specific, the 1st symbol, the 2nd symbol, the 3rd symbol, the 4th symbol, and the 5th symbol) and the 9th symbol of the plurality of OFDM symbols. For example, the AGC symbol is the 1st symbol of the plurality of OFDM symbols, the PSCCH symbol includes the 2nd symbol, the 3rd symbol, and the 4th symbol of the plurality of OFDM symbols, and the PSSCH DMRS symbol may include the 5th symbol and the 9th symbol of the plurality of OFDM symbols.

Alternatively, the AGC symbol, the PSCCH symbol, and the PSSCH DMRS symbol include the first five symbols (to be specific, the 1st symbol, the 2nd symbol, the 3rd symbol, the 4th symbol, and the 5th symbol) and the 11th symbol of the plurality of OFDM symbols. For example, the AGC symbol is the 1st symbol of the plurality of OFDM symbols, the PSCCH symbol includes the 2nd symbol, the 3rd symbol, and the 4th symbol of the plurality of OFDM symbols, and the PSSCH DMRS symbol may include the 5th symbol and the 11th symbol of the plurality of OFDM symbols.

Alternatively, the AGC symbol, the PSCCH symbol, and the PSSCH DMRS symbol include the first five symbols (to be specific, the 1st symbol, the 2nd symbol, the 3rd symbol, the 4th symbol, and the 5th symbol) and the 8th symbol of the plurality of OFDM symbols. For example, the AGC symbol is the 1st symbol of the plurality of OFDM symbols, the PSCCH symbol includes the 2nd symbol, the 3rd symbol, and the 4th symbol of the plurality of OFDM symbols, and the PSSCH DMRS symbol may include the 2nd symbol, the 5th symbol, and the 8th symbol of the plurality of OFDM symbols.

Alternatively, the AGC symbol, the PSCCH symbol, and the PSSCH DMRS symbol include the first four symbols (to be specific, the 1st symbol, the 2nd symbol, the 3rd symbol, and the 4th symbol), the 6th symbol, and the 10th symbol of the plurality of OFDM symbols. For example, the AGC symbol is the 1st symbol of the plurality of OFDM symbols, the PSCCH symbol includes the 2nd symbol, the 3rd symbol, and the 4th symbol of the plurality of OFDM symbols, and the PSSCH DMRS symbol may include the 2nd symbol, the 6th symbol, and the 10th symbol of the plurality of OFDM symbols.

Alternatively, the AGC symbol, the PSCCH symbol, and the PSSCH DMRS symbol include the first four symbols (to be specific, the 1st symbol, the 2nd symbol, the 3rd symbol, and the 4th symbol), the 7th symbol, and the 12th symbol of the plurality of OFDM symbols. For example, the AGC symbol is the 1st symbol of the plurality of OFDM symbols, the PSCCH symbol includes the 2nd symbol, the 3rd symbol, and the 4th symbol of the plurality of OFDM symbols, and the PSSCH DMRS symbol may include the 2nd symbol, the 7th symbol, and the 11th symbol of the plurality of OFDM symbols.

Alternatively, the AGC symbol, the PSCCH symbol, and the PSSCH DMRS symbol include the first five symbols (to be specific, the 1st symbol, the 2nd symbol, the 3rd symbol, and the 4th symbol), the 7th symbol, and the 12th symbol of the plurality of OFDM symbols. For example, the AGC symbol is the 1st symbol of the plurality of OFDM symbols, the PSCCH symbol includes the 2nd symbol, the 3rd symbol, and the 4th symbol of the plurality of OFDM symbols, and the PSSCH DMRS symbol may include the 2nd symbol, the 5th symbol, the 8th symbol, and the 11th symbol of the plurality of OFDM symbols.

(5) The SL CSI-RS symbol may be used to obtain sidelink channel state information. For example, a quantity of SL CSI-RS symbols may be one. A location (or a sequence number) of the PSSCH DMRS symbol may be configured by using higher layer signaling, for example, configured by using sl-CSI-RS-FirstSymbol. This is not limited. For example, the SL CSI-RS symbol may be one of the 4th symbol to a 2nd-to-last symbol of the plurality of OFDM symbols, or the SL CSI-RS symbol may be one of a 4th symbol to a (Y-1)th symbol of the Y OFDM symbols.

It should be noted that, in this embodiment of this application, a zz symbol may be understood as a symbol occupied by (or used for) zz, or may be understood as a symbol to which zz is mapped, or may be understood as a symbol used to carry zz. This is not limited. That the zz symbol is an ith symbol of the plurality of OFDM symbols may be understood as that the ith symbol of the plurality of OFDM symbols is occupied by (or used for) zz. That the zz symbol includes the ith symbol and a jth symbol of the plurality of OFDM symbols means that the zz symbol includes the ith symbol of the plurality of OFDM symbols and the jth symbol of the plurality of OFDM symbols. In addition, that the zz symbol includes the ith symbol and the jth symbol of the plurality of OFDM symbols may be understood as that the ith symbol and the jth symbol of the plurality of OFDM symbols are occupied by (or used for) zz. Other cases are deduced by analogy, and are not listed herein. In addition, for similar descriptions below, refer to the descriptions herein. Details are not described below again. zz may be any one of AGC, a GAP, a PSCCH, a PSSCH DMRS, an SL CSI-RS, an SL PRS, or the like.

The SL PRS symbol mentioned above is the last M symbols other than the one or more symbols of the plurality of OFDM symbols. For example, if the plurality of OFDM symbols further include the AGC symbol in addition to the SL PRS symbol, the SL PRS symbol may be last M symbols other than the AGC symbol of the plurality of OFDM symbols.

Alternatively, if the plurality of OFDM symbols further include the AGC symbol and the GAP symbol in addition to the SL PRS symbol, the SL PRS symbol may be last M symbols other than the AGC symbol and the GAP symbol of the plurality of OFDM symbols. Alternatively, if the plurality of OFDM symbols further include the AGC symbol, the GAP symbol, and the PSCCH symbol in addition to the SL PRS symbol, the SL PRS symbol may be last M symbols other than the AGC symbol, the GAP symbol, and the PSCCH symbol of the plurality of OFDM symbols. Alternatively, if the plurality of OFDM symbols further include the AGC symbol, the GAP symbol, the PSCCH symbol, and the PSSCH DMRS symbol in addition to the SL PRS symbol, the SL PRS symbol may be last M symbols other than the AGC symbol, the GAP symbol, the PSCCH symbol, and the PSSCH DMRS symbol of the plurality of OFDM symbols. Alternatively, if the plurality of OFDM symbols further include the AGC symbol, the GAP symbol, the PSCCH symbol, the PSSCH DMRS symbol, and the SL CSI-RS symbol in addition to the SL PRS symbol, the SL PRS symbol may be last M symbols other than the AGC symbol, the GAP symbol, the PSCCH symbol, the PSSCH DMRS symbol, and the SL CSI-RS symbol of the plurality of OFDM symbols. Other cases are deduced by analogy, and are not listed one by one.

In FIG. 3, an example in which the SL PRS symbol is last M symbols other than the AGC symbol, the GAP symbol, the PSCCH symbol, the PSSCH DMRS symbol, and the SL CSI-RS symbol of the plurality of OFDM symbols is used.

It should be noted that, that the SL PRS symbol is the last M symbols other than the one or more symbols of the plurality of OFDM symbols may be understood as: The SL PRS symbol is different from the one or more symbols, and the SL PRS symbol is last M symbols of symbols available for the SL PRS of the plurality of OFDM symbols; or may be understood as: The SL PRS symbol is time-division multiplexed with the one or more symbols, and the SL PRS symbol is last M symbols of symbols available for the SL PRS of the plurality of OFDM symbols. The symbol available for the SL PRS may be a symbol other than the one or more symbols of the plurality of OFDM symbols.

In an implementation, the SL CSI-RS symbol may be a semi-statically configured symbol. For example, the SL CSI-RS symbol is configured by the network device. For example, the first terminal device may send first information. For example, the first terminal device sends the first information to a second terminal device; and correspondingly, the second terminal device receives the first information. The first information may indicate the first terminal device to send an SL CSI-RS, or may indicate the first terminal device not to send an SL CSI-RS. If the first information indicates to send the SL CSI-RS, the first terminal device sends the SL CSI-RS by using the semi-statically configured SL CSI-RS symbol; or if the first information indicates not to send the SL CSI-RS, the first terminal device does not send the SL CSI-RS. In an example, the plurality of OFDM symbols include the SL CSI-RS symbol. In other words, regardless of whether the first information indicates the first terminal device to send the SL CSI-RS or indicates the first terminal device not to send the SL CRI-RS, that is, regardless of whether the first terminal device sends the SL CSI-RS, the plurality of OFDM symbols include the SL CSI-RS symbol. In another example, when the first information indicates the first terminal device to send the SL CSI-RS, that is, when the first terminal device sends the SL CSI-RS, the plurality of OFDM symbols include the SL CSI-RS symbol. Alternatively, when the first information indicates the first terminal device not to send the SL CSI-RS, that is, the first terminal device does not send the SL CSI-RS, the plurality of OFDM symbols may not include the SL CSI-RS symbol. In this way, when the first terminal device does not send the SL CSI-RS, the SL PRS may be mapped to a symbol originally configured for the SL CSI-RS, so that resource utilization can be improved.

Table 2 shows an example of related information of the SL CSI-RS. As shown in Table 2, for the SL CSI-RS, one thing that needs to be clarified is whether the CSI-RS refers to a higher layer configured CSI-RS symbol or actual presence of the CSI-RS is indicated in SCI. We think that for simplicity, the CSI-RS symbol should only be considered when the SCI indicates that the CSI-RS is sent. When the SL CSI-RS is sent, the SL CSI-RS symbol should be treated as a PSSCH DMRS symbol to which the SL PRS cannot be mapped. Therefore, it is suggested that when the symbol to which the SL PRS is mapped is determined, the actually transmitted SL CSI-RS symbol should be excluded.

Table 2

| |
|---|
| For SL CSI-RS, one thing that requires clarifying is whether the CSI-RS refers to higher layer configured CSI-RS symbols or its actual presence as indicated in SCI. We think that for simplicity, the CSI-RS symbol should only be considered when SCI indicates that the CSI-RS is transmitted. <br><br> When the SL CSI-RS is transmitted, the CSI-RS symbol should be treated as DMRS symbols on which the SL-PRS cannot be mapped. <br><br> Proposal: The actually transmitted SL CSI-RS symbol should be excluded when determining the symbols mapped with SL-PRS. |

The following uses an example in which the plurality of OFDM symbols (namely, the Y OFDM symbols) include the AGC symbol, the GAP symbol, the PSCCH symbol, the PSSCH DMRS symbol, the SL CSI-RS symbol, and the SL PRS symbol, to describe the location of the SL PRS symbol for different values of Y and different values of M.

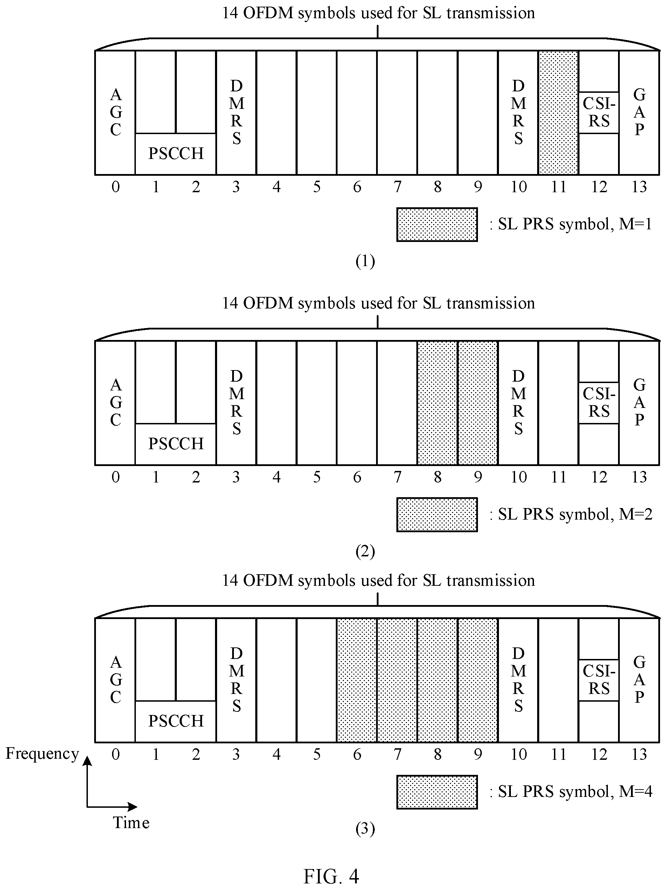

In an example, it is assumed that Y=14 (that is, the plurality of OFDM symbols are 14 OFDM symbols), and $l_d$=13. The AGC symbol is a 1st symbol of the 14 OFDM symbols, the PSCCH symbol includes a 2nd symbol and a 3rd symbol of

the 14 OFDM symbols, the GAP symbol is a last symbol of the 14 OFDM symbols, the PSSCH DMRS symbol includes a $4^{th}$ symbol and an $11^{th}$ symbol of the 14 OFDM symbols, and the SL CSI-RS symbol is a $13^{th}$ symbol of the 14 OFDM symbols. In this case, when M=1, the SL PRS symbol may be a $12^{th}$ symbol of the 14 OFDM symbols, as shown in (1) in FIG. 4; or when M=2, the SL PRS symbol may include a $9^{th}$ symbol and a $10^{th}$ symbol of the 14 OFDM symbols, as shown in (2) in FIG. 4; or when M is 4, the SL PRS symbol may include a $7^{th}$ symbol, an $8^{th}$ symbol, a $9^{th}$ symbol, and a $10^{th}$ symbol of the 14 OFDM symbols, as shown in (3) in FIG. 4.

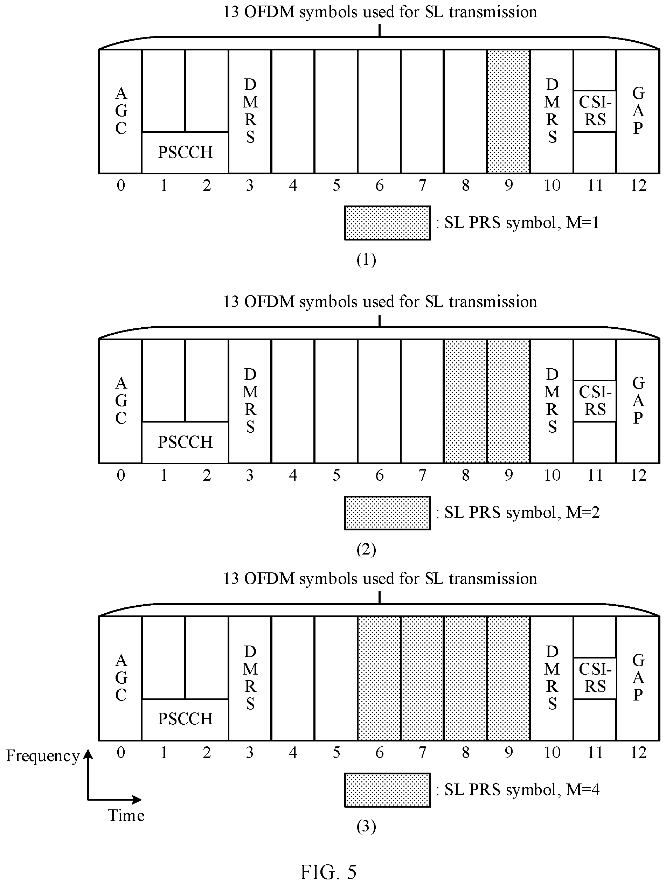

In another example, it is assumed that Y=13, and $l_d$=12. The AGC symbol is a $1^{st}$ symbol of the 13 OFDM symbols, the PSCCH symbol includes a $2^{nd}$ symbol and a $3^{rd}$ symbol of the 13 OFDM symbols, the GAP symbol is a last symbol of the 13 OFDM symbols, the PSSCH DMRS symbol includes a $4^{th}$ symbol and an $11^{th}$ symbol of the 13 OFDM symbols, and the SL CSI-RS symbol is a $12^{th}$ symbol of the 13 OFDM symbols. In this case, when M is 1, the SL PRS symbol may be a $10^{th}$ symbol of the 13 OFDM symbols, as shown in (1) in FIG. 5; or when M is 2, the SL PRS symbol may include a $9^{th}$ symbol and a $10^{th}$ symbol of the 13 OFDM symbols, as shown in (2) in FIG. 5; or when M is 4, the SL PRS symbol includes a $7^{th}$ symbol, an $8^{th}$ symbol, a $9^{th}$ symbol, and a $10^{th}$ symbol of the 14 OFDM symbols, as shown in (3) in FIG. 5.

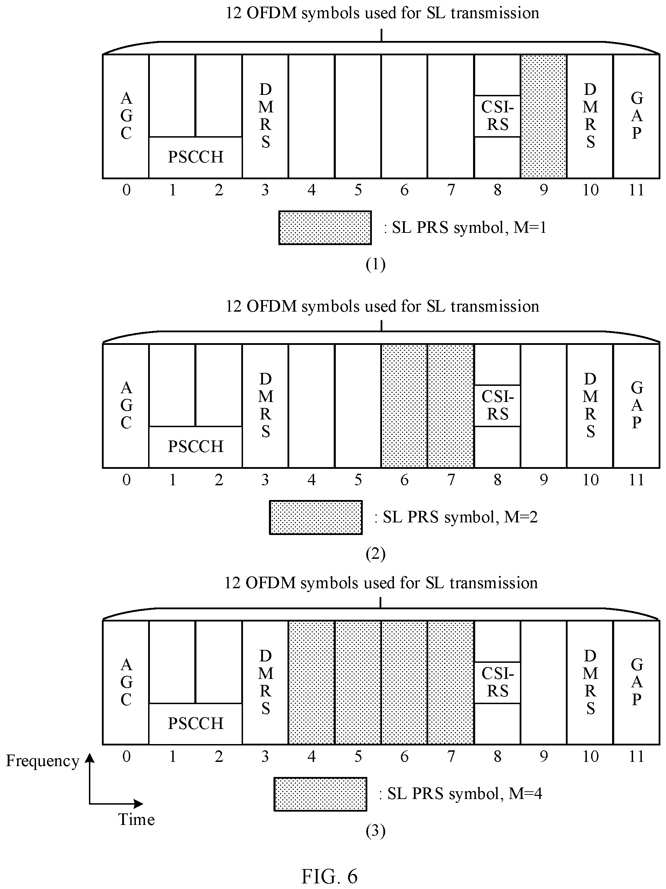

In another example, it is assumed that Y=12, and $l_d$=11. The AGC symbol is a $1^{st}$ symbol of the 12 OFDM symbols, the PSCCH symbol includes a $2^{nd}$ symbol and a $3^{rd}$ symbol of the 12 OFDM symbols, the GAP symbol is a last symbol of the 12 OFDM symbols, the PSSCH DMRS symbol includes a $4^{th}$ symbol and an $11^{th}$ symbol of the 12 OFDM symbols, and the SL CSI-RS symbol is a $9^{th}$ symbol of the 12 OFDM symbols. In this case, when M is 1, the SL PRS symbol may be a $10^{th}$ symbol of the 12 OFDM symbols, as shown in (1) in FIG. 6; or when M is 2, the SL PRS symbol may include a $7^{th}$ symbol and an $8^{th}$ symbol of the 12 OFDM symbols, as shown in (2) in FIG. 6; or when M is 4, the SL PRS symbol may include a $5^{th}$ symbol, a $6^{th}$ symbol, a $7^{th}$ symbol, and an $8^{th}$ symbol of the 12 OFDM symbols, as shown in (3) in FIG. 6.

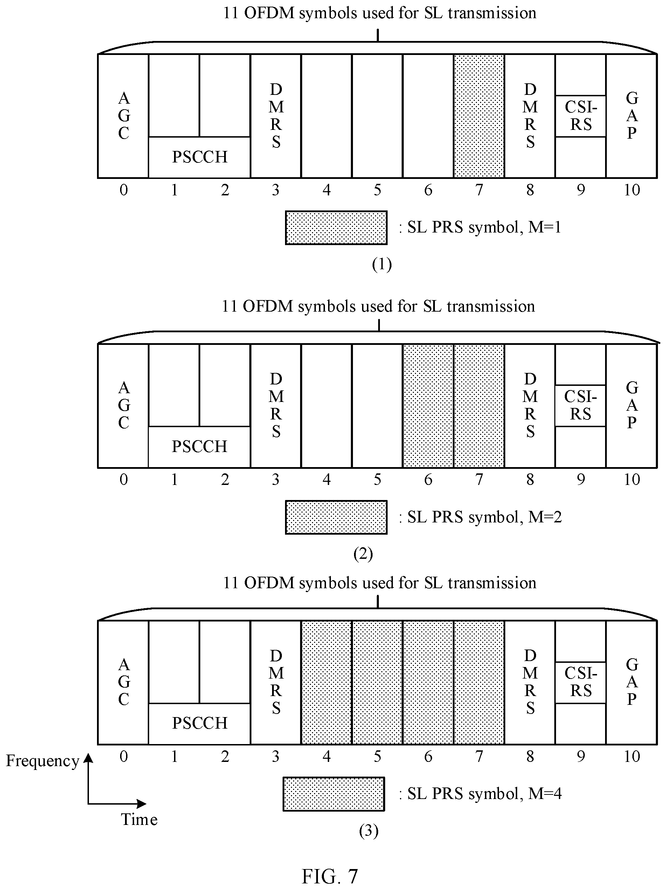

In another example, it is assumed that Y=11, and $l_d$=10. The AGC symbol is a $1^{st}$ symbol of the 11 OFDM symbols, the PSCCH symbol includes a $2^{nd}$ symbol and a $3^{rd}$ symbol of the 11 OFDM symbols, the GAP symbol is a last symbol of the 11 OFDM symbols, the PSSCH DMRS symbol includes a $4^{th}$ symbol and a $9^{th}$ symbol of the 11 OFDM symbols, and the SL CSI-RS symbol is a $10^{th}$ symbol of the 11 OFDM symbols. In this case, when M is 1, the SL PRS symbol may be an $8^{th}$ symbol of the 11 OFDM symbols, as shown in (1) in FIG. 7; or when M is 2, the SL PRS symbol may include a $7^{th}$ symbol and an $8^{th}$ symbol of the 11 OFDM symbols, as shown in (2) in FIG. 7; or when M is 2, the SL PRS symbol may include a $5^{th}$ symbol, a $6^{th}$ symbol, a $7^{th}$ symbol, and an $8^{th}$ symbol of the 11 OFDM symbols, as shown in (3) in FIG. 7.

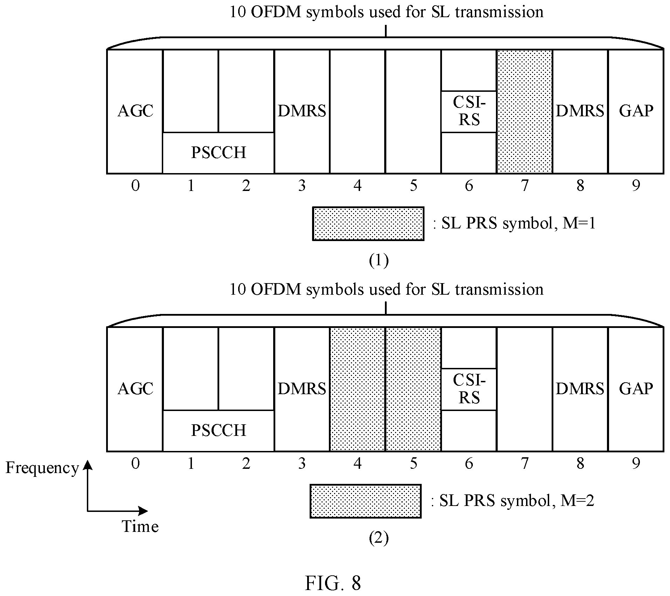

In another example, it is assumed that Y=10, and $l_d$=9. The AGC symbol is a $1^{st}$ symbol of the 10 OFDM symbols, the PSCCH symbol includes a $2^{nd}$ symbol and a $3^{rd}$ symbol of the 10 OFDM symbols, the GAP symbol is a last symbol of the 10 OFDM symbols, the PSSCH DMRS symbol includes a $4^{th}$ symbol and a $9^{th}$ symbol of the 10 OFDM symbols, and the SL CSI-RS symbol is a $7^{th}$ symbol of the 10 OFDM symbols. In this case, when M is 1, the SL PRS symbol may be an $8^{th}$ symbol of the 10 OFDM symbols, as shown in (1) in FIG. 8; or when M is 2, the SL PRS symbol may include a $5^{th}$ symbol and a $6^{th}$ symbol of the 10 OFDM symbols, as shown in (2) in FIG. 8.

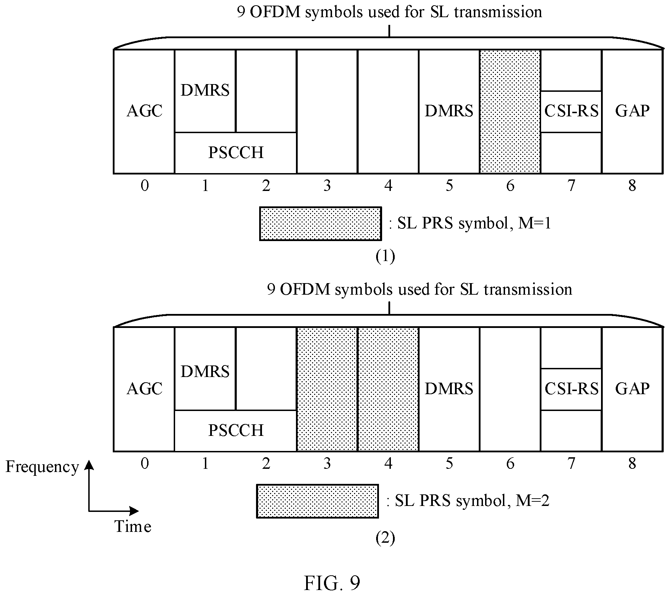

In still another example, it is assumed that Y=9, and $l_d$=8. The AGC symbol is a $1^{st}$ symbol of the 9 OFDM symbols, the PSCCH symbol includes a $2^{nd}$ symbol and a $3^{rd}$ symbol of the 9 OFDM symbols, the GAP symbol is a last symbol of the 9 OFDM symbols, the PSSCH DMRS symbol includes the $2^{nd}$ symbol and a $6^{th}$ symbol of the 9 OFDM symbols, and the SL CSI-RS symbol is an $8^{th}$ symbol of the 9 OFDM symbols. In this case, when M is 1, the SL PRS symbol may be a $7^{th}$ symbol of the 9 OFDM symbols, as shown in (1) in FIG. 9; or when M is 2, the SL PRS symbol may include a $4^{th}$ symbol and a $5^{th}$ symbol of the 9 OFDM symbols, as shown in (2) in FIG. 9.

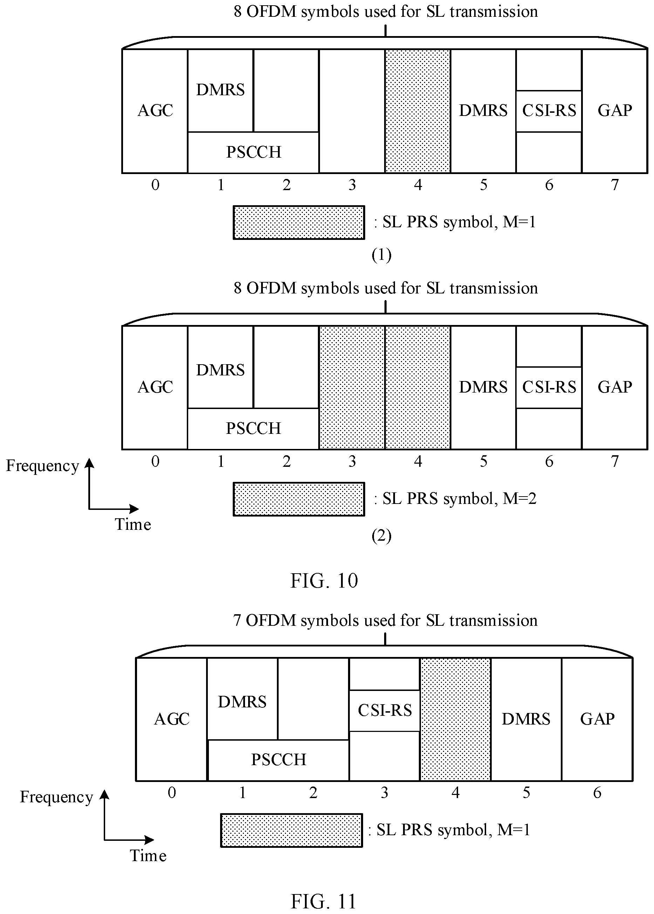

In still another example, it is assumed that Y=8, and $l_d$=7. The AGC symbol is a $1^{st}$ symbol of the 8 OFDM symbols, the PSCCH symbol includes a $2^{nd}$ symbol and a $3^{rd}$ symbol of the 8 OFDM symbols, the GAP symbol is a last symbol of the 8 OFDM symbols, the PSSCH DMRS symbol includes the $2^{nd}$ symbol and a $6^{th}$ symbol of the 8 OFDM symbols, and the SL CSI-RS symbol is a $7^{th}$ symbol of the 8 OFDM symbols. In this case, when M is 1, the SL PRS symbol may be a $5^{th}$ symbol of the 8 OFDM symbols, as shown in (1) in FIG. 10; or when M is 2, the SL PRS symbol may include a $4^{th}$ symbol and a $5^{th}$ symbol of the 8 OFDM symbols, as shown in (2) in FIG. 10.

In still another example, it is assumed that Y=7, and $l_d$=6. The AGC symbol is a $1^{st}$ symbol of the 7 OFDM symbols, the PSCCH symbol includes a $2^{nd}$ symbol and a $3^{rd}$ symbol of the 7 OFDM symbols, the GAP symbol is a last symbol of the 7 OFDM symbols, the PSSCH DMRS symbol includes the $2^{nd}$ symbol and a $6^{th}$ symbol of the 7 OFDM symbols, and the SL CSI-RS symbol is a $4^{th}$ symbol of the 7 OFDM symbols. In this case, when M is 1, the SL PRS symbol may be a $5^{th}$ symbol of the 7 OFDM symbols, as shown in FIG. 11.

It should be noted that, in FIG. 4 to FIG. 11, an example in which a PSSCH DMRS is a DMRS and an SL CSI-RS is a CSI-RS is used for illustration. It should be understood that, the embodiment shown in any one of FIG. 4 to FIG. 11 is used as an example, and the location of the SL PRS symbol is not limited. For example, it is assumed that Y=14, and $l_d$=13. The AGC symbol is a $1^{st}$ symbol of the 14 OFDM symbols, the PSCCH symbol includes a $2^{nd}$ symbol and a $3^{rd}$ symbol of the 14 OFDM symbols, the GAP symbol is a last symbol of the 14 OFDM symbols, the PSSCH DMRS symbol includes the $2^{nd}$ symbol, a $6^{th}$ symbol, and a $10^{th}$ symbol of the 14 OFDM symbols, and the SL CSI-RS symbol is a $13^{th}$ symbol of the 14 OFDM symbols. In this case, when M=1, the SL PRS symbol may be a $12^{th}$ symbol of the 14 OFDM symbols; or when M=2, the SL PRS symbol may include an $11^{th}$ symbol and a $12^{th}$ symbol of the 14 OFDM symbols.

S302: The first terminal device sends the plurality of OFDM symbols. For example, the first terminal device sends the plurality of OFDM symbols to the second terminal device; and correspondingly, the second terminal device receives the plurality of OFDM symbols from the first terminal device.

For example, the first terminal device may send the plurality of OFDM symbols to the second terminal device through a PC5 interface; and correspondingly, the second terminal device may receive the plurality of OFDM symbols from the first terminal device through the PC5 interface.

S303: The second terminal device determines the SL PRS symbol.

S303 is an optional step, and is represented by a dashed line in FIG. 3. For example, after receiving the plurality of OFDM symbols, the second terminal device may determine (or parse) the SL PRS symbol (or determine the SL PRS) from the plurality of OFDM symbols. For example, the second terminal device may determine the SL PRS symbol (or determine the SL PRS) from the plurality of OFDM symbols based on the location of the SL PRS symbol. For the location of the SL PRS symbol, refer to content of S301. Details are not described herein again.

As mentioned above, the plurality of OFDM symbols include the SL PRS symbol, and the plurality of OFDM symbols may further include one or more of the following symbols: the AGC symbol, the GAP symbol, the PSCCH symbol, the PSSCH DMRS symbol, or the SL CSI-RS symbol. In another implementation, the plurality of OFDM symbols may further include a sidelink phase tracking reference signal (sidelink phase tracking reference signal, SL PT-RS) symbol. The SL PT-RS symbol may be used to track a change of phase noise of a sidelink channel. For example, the SL PT-RS symbol may be time-division multiplexed with the PSCCH symbol, and the SL PT-RS may be further time-division multiplexed with the PSSCH DMRS symbol. A location of the SL PT-RS symbol may be configured by using higher layer signaling, for example, configured by using sl-PTRS-TimeDensity. This is not limited. In this implementation, the SL PRS symbol may be last M symbols other than the SL PT-RS symbol and the one or more symbols of the plurality of OFDM symbols. In other words, the SL PRS symbol is different from the SL PT-RS symbol, or the SL PRS symbol is time-division multiplexed with the SL PT-RS symbol. For descriptions of the M symbol, refer to the foregoing content. Details are not described herein again.

For example, if the plurality of OFDM symbols further include the AGC symbol in addition to the SL PRS symbol and the SL PT-RS symbol, the SL PRS symbol may be last M symbols other than the AGC symbol and the SL PT-RS symbol of the plurality of OFDM symbols. Alternatively, if the plurality of OFDM symbols further include the AGC symbol and the GAP symbol in addition to the SL PRS symbol and the SL PT-RS symbol, the SL PRS symbol may be last M symbols other than the AGC symbol, the GAP symbol, and the SL PT-RS symbol of the plurality of OFDM symbols. Alternatively, if the plurality of OFDM symbols further include the AGC symbol, the GAP symbol, and the PSCCH symbol in addition to the SL PRS symbol and the SL PT-RS symbol, the SL PRS symbol may be last M symbols other than the AGC symbol, the GAP symbol, the PSCCH symbol, and the SL PT-RS symbol of the plurality of OFDM symbols. Alternatively, if the plurality of OFDM symbols further include the AGC symbol, the GAP symbol, the PSCCH symbol, and the PSSCH DMRS symbol in addition to the SL PRS symbol and the SL PT-RS symbol, the SL PRS symbol may be last M symbols other than the AGC symbol, the GAP symbol, the PSCCH symbol, the PSSCH DMRS symbol, and the SL PT-RS symbol of the plurality of OFDM symbols. Alternatively, if the plurality of OFDM symbols further include the AGC symbol, the GAP symbol, the PSCCH symbol, the PSSCH DMRS symbol, and the SL CSI-RS symbol in addition to the SL PRS symbol and the SL PT-RS symbol, the SL PRS symbol may be last M symbols other than the AGC symbol, the GAP symbol, the PSCCH symbol, the PSSCH DMRS symbol, the SL CSI-RS symbol, and the SL PT-RS symbol of the plurality of OFDM symbols. Other cases are deduced by analogy, and are not listed one by one.

The following uses an example in which the plurality of OFDM symbols (namely, the Y OFDM symbols) include the AGC symbol, the GAP symbol, the PSCCH symbol, the PSSCH DMRS symbol, the SL CSI-RS symbol, the SL PT-RS symbol, and the SL PRS symbol, to describe the location of the SL PRS symbol for different values of Y and different values of M.

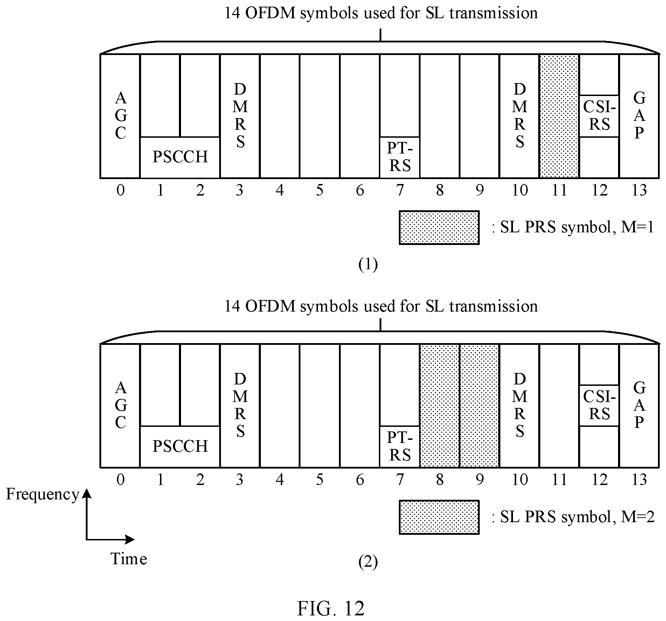

In an example, it is assumed that Y=14 (that is, the plurality of OFDM symbols are 14 OFDM symbols), and $l_d$=13. The AGC symbol is a 1st symbol of the 14 OFDM symbols, the PSCCH symbol includes a 2nd symbol and a 3rd symbol of the 14 OFDM symbols, the SL PT-RS symbol is an 8th symbol of the 14 OFDM symbols, the GAP symbol is a last symbol of the 14 OFDM symbols, the PSSCH DMRS symbol includes a 4th symbol and an 11th symbol of the 14 OFDM symbols, and the SL CSI-RS symbol is a 13th symbol of the 14 OFDM symbols. In this case, when M is 1, the SL PRS symbol may be a 12th symbol of the 14 OFDM symbols, as shown in (1) in FIG. 12; or when M is 2, the SL PRS symbol may include a 9th symbol and a 10th symbol of the 14 OFDM symbols, as shown in (2) in FIG. 12.

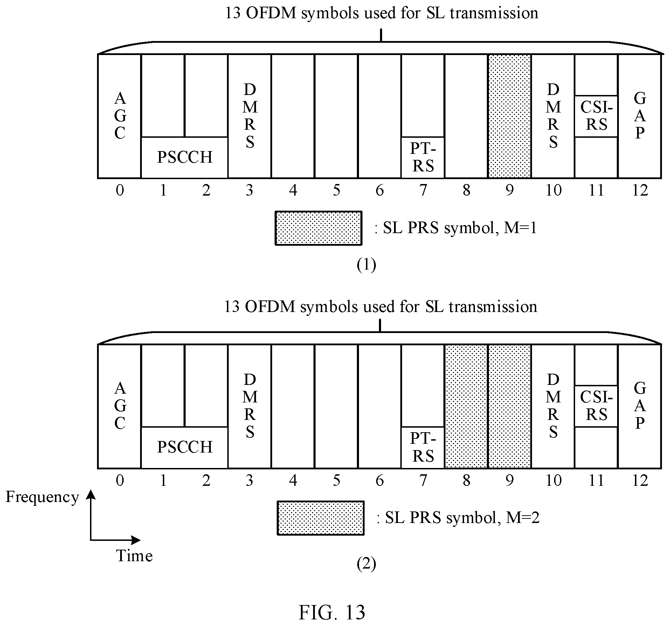

In another example, it is assumed that Y=13, and $l_d$=12. The AGC symbol is a 1st symbol of the 13 OFDM symbols, the PSCCH symbol includes a 2nd symbol and a 3rd symbol of the 13 OFDM symbols, the SL PT-RS symbol is an 8th symbol of the 13 OFDM symbols, the GAP symbol is a last symbol of the 13 OFDM symbols, the PSSCH DMRS symbol includes a 4th symbol and an 11th symbol of the 13 OFDM symbols, and the SL CSI-RS symbol is a 12th symbol of the 13 OFDM symbols. In this case, when M is 1, the SL PRS symbol may be a 10th symbol of the 13 OFDM symbols, as shown in (1) in FIG. 13; or when M is 2, the SL PRS symbol may include a 9th symbol and a 10th symbol of the 13 OFDM symbols, as shown in (2) in FIG. 13.

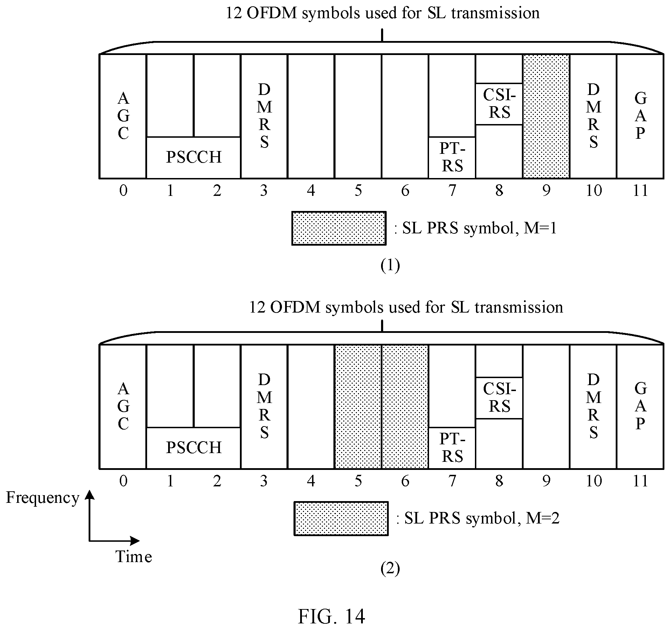

In another example, it is assumed that Y=12, and $l_d$=11. The AGC symbol is a 1st symbol of the 12 OFDM symbols, the PSCCH symbol includes a 2nd symbol and a 3rd symbol of the 12 OFDM symbols, the SL PT-RS symbol is an 8th symbol of the 12 OFDM symbols, the GAP symbol is a last symbol of the 12 OFDM symbols, the PSSCH DMRS symbol includes a 4th symbol and an 11th symbol of the 12 OFDM symbols, and the SL CSI-RS symbol is a 9th symbol of the 12 OFDM symbols. In this case, when M is 1, the SL PRS symbol is a 10th symbol of the 12 OFDM symbols, as shown in (1) in FIG. 14; or when M is 2, the SL PRS symbol includes a 6th symbol and a 7th symbol of the 12 OFDM symbols, as shown in (2) in FIG. 14.

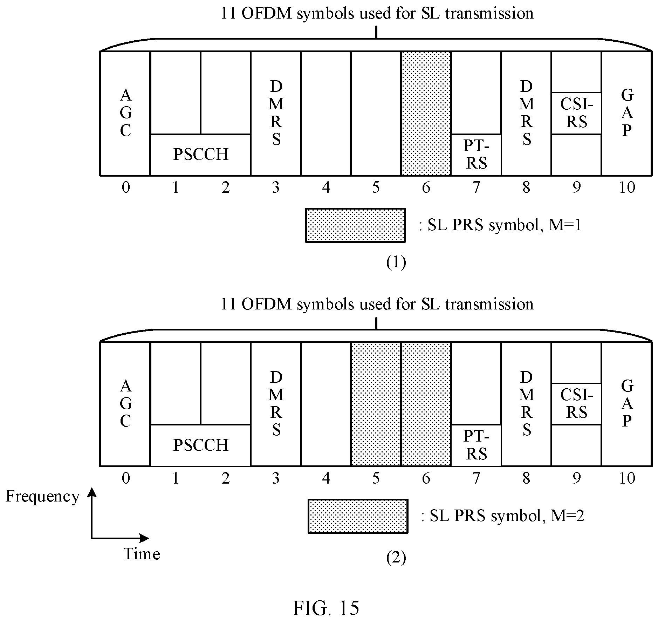

In still another example, it is assumed that Y=11, and $l_d$=10. The AGC symbol is a 1st symbol of the 11 OFDM symbols, the PSCCH symbol includes a 2nd symbol and a 3rd symbol of the 11 OFDM symbols, the SL PT-RS symbol is an 8th symbol of the 11 OFDM symbols, the GAP symbol is a last symbol of the 11 OFDM symbols, the PSSCH DMRS symbol includes a 4th symbol and a 9th symbol of the 11 OFDM symbols, and the SL CSI-RS symbol is a 10th symbol of the 11 OFDM symbols. In this case, when M is 1, the SL PRS symbol is a 7th symbol of the 11 OFDM symbols, as shown in (1) in FIG. 15; or when M is 2, the SL PRS symbol includes a 6th symbol and a 7th symbol of the 11 OFDM symbols, as shown in (2) in FIG. 15.

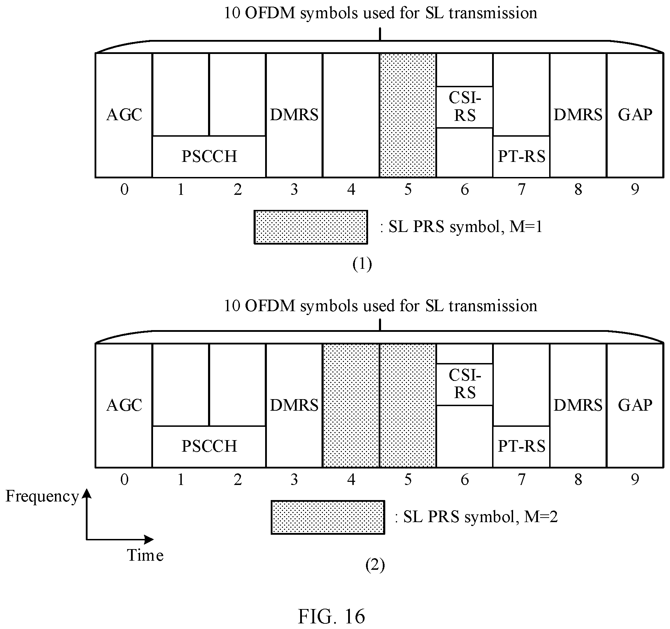

In still another example, it is assumed that Y=10, and $l_d$=9. The AGC symbol is a 1st symbol of the 10 OFDM symbols, the PSCCH symbol includes a 2nd symbol and a 3rd symbol of the 10 OFDM symbols, the SL PT-RS symbol is an 8th symbol of the 10 OFDM symbols, the GAP symbol is a last symbol of the 10 OFDM symbols, the PSSCH DMRS symbol includes a 4th symbol and a 9th symbol of the 10 OFDM symbols, and the SL CSI-RS symbol is a 7th symbol of the 10 OFDM symbols. In this case, when M is 1, the SL PRS symbol is a 6th symbol of the 10 OFDM symbols, as shown in (1) in FIG. 16; or when M is 2, the SL PRS symbol includes a 5th symbol and a 6th symbol of the 10 OFDM symbols, as shown in (2) in FIG. 16.

It should be noted that, in FIG. 12 to FIG. 16, an example in which a PSSCH DMRS is a DMRS, an SL CSI-RS is a CSI-RS, and an SL PT-RS is a PT-RS is used for illustration. It should be understood that, the embodiment shown in any one of FIG. 12 to FIG. 16 is used as an example, and the location of the SL PRS symbol is not limited. For example, it is assumed that Y=14, and $l_d$=13. The AGC symbol is a 1st symbol of the 14 OFDM symbols, the PSCCH symbol includes a 2nd symbol and a 3rd symbol of the 14 OFDM symbols, the SL PT-RS symbol is an 8th symbol of the 14 OFDM symbols, the GAP symbol is a last symbol of the 14 OFDM symbols, and the PSSCH DMRS symbol includes a 4th symbol and an 11th symbol of the 14 OFDM symbols. In this case, when M=1, the SL PRS symbol may be a 13th symbol of the 14 OFDM symbols; or when M=2, the SL PRS symbol may include a 12th symbol and a 13th symbol of the 14 OFDM symbols.

In another implementation, the plurality of OFDM symbols may further include a physical sidelink feedback channel (physical sidelink feedback channel, PSFCH) symbol. The PSFCH symbol may be used for feedback of a unicast or multicast hybrid automatic repeat request (hybrid automatic repeat request, HARQ). For example, a quantity of PSFCH symbols may be 1 or 2. For example, the PSFCH symbol may be the 2nd-to-last symbol of the plurality of OFDM symbols; or the PSFCH symbol may be a $(Y-1)^{th}$ symbol of the Y OFDM symbols. For another example, the PSFCH symbol may alternatively be the 2nd-to-last symbol and a 3rd-to-last symbol of the plurality of OFDM symbols; or the PSFCH symbol may be a $(Y-1)^{th}$ symbol and a $(Y-2)^{th}$ symbol of the Y OFDM symbols. Optionally, whether the PSFCH symbol exists may be configured by using higher layer signaling, for example, configured by using sl-PSFCH-Period. This is not limited. In this implementation, the SL PRS symbol may be last M symbols other than the PSFCH symbol and the one or more symbols of the plurality of OFDM symbols. In other words, the SL PRS symbol is different from the PSFCH symbol, or the SL PRS symbol is time-division multiplexed with the PSFCH symbol. For descriptions of the M symbols, refer to the foregoing content. Details are not described herein again.

For example, if the plurality of OFDM symbols further include the AGC symbol in addition to the SL PRS symbol and the PSFCH symbol, the SL PRS symbol may be last M symbols other than the AGC symbol and the PSFCH symbol of the plurality of OFDM symbols. Alternatively, if the plurality of OFDM symbols further include the AGC symbol and the GAP symbol in addition to the SL PRS symbol and the PSFCH symbol, the SL PRS symbol may be last M symbols other than the AGC symbol, the GAP symbol, and the PSFCH symbol of the plurality of OFDM symbols. Alternatively, if the plurality of OFDM symbols further include the AGC symbol, the GAP symbol, and the PSCCH symbol in addition to the SL PRS symbol and the PSFCH symbol, the SL PRS symbol may be last M symbols other than the AGC symbol, the GAP symbol, the PSCCH symbol, and the PSFCH symbol of the plurality of OFDM symbols. Alternatively, if the plurality of OFDM symbols further include the AGC symbol, the GAP symbol, the PSCCH symbol, and the PSSCH DMRS symbol in addition to the SL PRS symbol and the PSFCH symbol, the SL PRS symbol may be last M symbols other than the AGC symbol, the GAP symbol, the PSCCH symbol, the PSSCH DMRS symbol, and the PSFCH symbol of the plurality of OFDM symbols. Alternatively, if the plurality of OFDM symbols further include the AGC symbol, the GAP symbol, the PSCCH symbol, the PSSCH DMRS symbol, and the SL CSI-RS symbol in addition to the SL PRS symbol and the PSFCH symbol, the SL PRS symbol may be last M symbols other than the AGC symbol, the GAP symbol, the PSCCH symbol, the PSSCH DMRS symbol, the SL CSI-RS symbol, and the PSFCH symbol of the plurality of OFDM symbols. Other cases are deduced by analogy, and are not listed one by one.

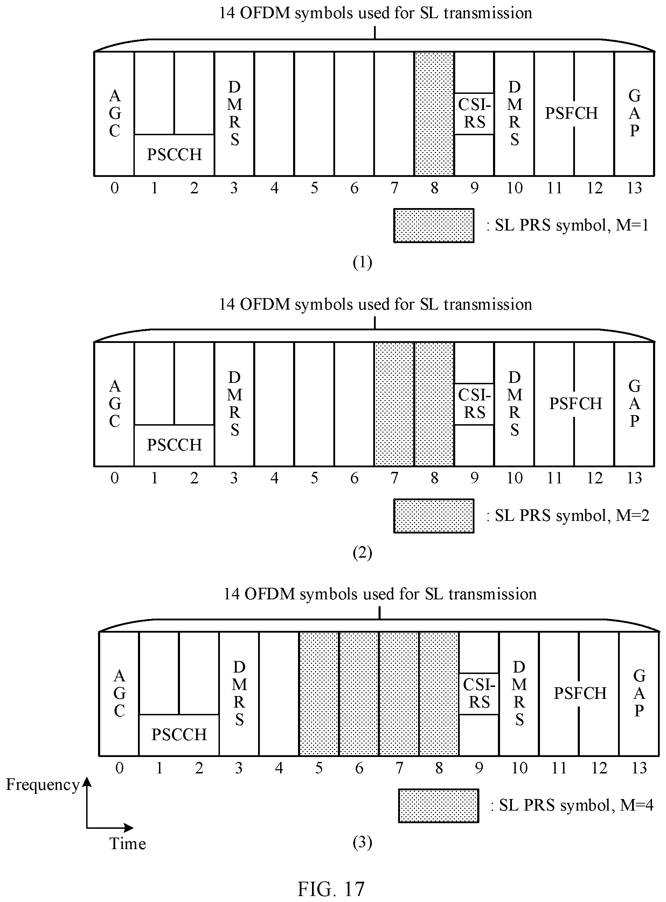

For example, it is assumed that Y=14, and $l_d$=13. The AGC symbol is a 1st symbol of the 14 OFDM symbols, the PSCCH symbol includes a 2nd symbol and a 3rd symbol of the 14 OFDM symbols, the GAP symbol is a last symbol of the 14 OFDM symbols, the PSSCH DMRS symbol includes a 4th symbol and an 11th symbol of the 14 OFDM symbols, the SL CSI-RS symbol is a 10th symbol of the 14 OFDM symbols, and the PSFCH symbol includes a 12th symbol and a 13th symbol of the 14 OFDM symbols. In this case, when M is 1, the SL PRS symbol may be a 9th symbol of the 14 OFDM symbols, as shown in (1) in FIG. 17; or when M is 2, the SL PRS symbol may include an 8th symbol and a 9th symbol of the 14 OFDM symbols, as shown in (2) in FIG. 17; or when M is 4, the SL PRS symbol may include a 6th symbol, a 7th symbol, an 8th symbol, and a 9th symbol of the 14 OFDM symbols, as shown in (3) in FIG. 17.

It should be noted that, in FIG. 17, an example in which a PSSCH DMRS is a DMRS and an SL CSI-RS is a CSI-RS is used for illustration. It should be understood that, the embodiment shown in FIG. 17 is used as an example, and the location of the SL PRS symbol is not limited. For example, it is assumed that Y=14, and $l_d$=13. The AGC symbol is a 1st symbol of the 14 OFDM symbols, the PSCCH symbol includes a 2nd symbol and a 3rd symbol of the 14 OFDM symbols, the SL CSI-RS symbol is a 10th symbol of the 14 OFDM symbols, the PSFCH symbol is a 13th symbol of the 14 OFDM symbols, the GAP symbol is a last symbol of the 14 OFDM symbols, and the PSSCH DMRS symbol includes a 4th symbol and an 11th symbol of the 14 OFDM symbols. In this case, when M=1, the SL PRS symbol may be a 12th symbol of the 14 OFDM symbols; or when M is 2, the SL PRS symbol may include an 8th symbol and a 9th symbol of the 14 OFDM symbols; or when M is 4, the SL PRS symbol may include a 6th symbol, a 7th symbol, an 8th symbol, and a 9th symbol of the 14 OFDM symbols.

In another implementation, the plurality of OFDM symbols may further include the SL PT-RS symbol and the PSFCH symbol. For the SL PT-RS symbol and the PSFCH symbol, refer to the foregoing content. Details are not described again. In this implementation, the SL PRS symbol may be last M symbols other than the SL PT-RS symbol, the PSFCH symbol, and the one or more symbols of the plurality of OFDM symbols. In other words, the SL PRS symbol is different from the SL PT-RS symbol and the PSFCH symbol, or the SL PRS symbol is time-division multiplexed with the SL PT-RS symbol and the PSFCH symbol.

For example, if the plurality of OFDM symbols further include the AGC symbol in addition to the SL PRS symbol, the SL PT-RS symbol, and the PSFCH symbol, the SL PRS symbol may be last M symbols other than the AGC symbol, the SL PT-RS symbol, and the PSFCH symbol of the plurality of OFDM symbols. Alternatively, if the plurality of OFDM symbols further include the AGC symbol and the GAP symbol in addition to the SL PRS symbol, the SL PT-RS symbol, and the PSFCH symbol, the SL PRS symbol may be last M symbols other than the AGC symbol, the GAP symbol, the SL PT-RS symbol, and the PSFCH symbol of the plurality of OFDM symbols. Alternatively, if the plurality of OFDM symbols further include the AGC symbol, the GAP symbol, and the PSCCH symbol in addition to the SL PRS symbol, the SL PT-RS symbol, and the PSFCH symbol, the SL PRS symbol may be last M symbols other than the AGC symbol, the GAP symbol, the PSCCH symbol, the SL PT-RS symbol, and the PSFCH symbol of the plurality of OFDM symbols. Alternatively, if the plurality of OFDM symbols further include the AGC symbol, the GAP symbol, the PSCCH symbol, and the PSSCH DMRS symbol in addition to the SL PRS symbol, the SL PT-RS symbol, and the PSFCH symbol, the SL PRS symbol may be last M symbols other than the AGC symbol, the GAP symbol, the PSCCH symbol, the PSSCH DMRS symbol, the SL PT-RS symbol, and the PSFCH symbol of the plurality of OFDM symbols. Alternatively, if the plurality of OFDM symbols further include the AGC symbol, the GAP symbol, the PSCCH symbol, the PSSCH DMRS symbol, and the SL CSI-RS symbol in addition to the SL PRS symbol, the SL PT-RS symbol, and the PSFCH symbol, the SL PRS symbol may be last M symbols other than the AGC symbol, the GAP symbol, the PSCCH symbol, the PSSCH DMRS symbol, the SL CSI-RS symbol, the SL PT-RS symbol, and the PSFCH symbol of the plurality of OFDM symbols. Other cases are deduced by analogy, and are not listed one by one.

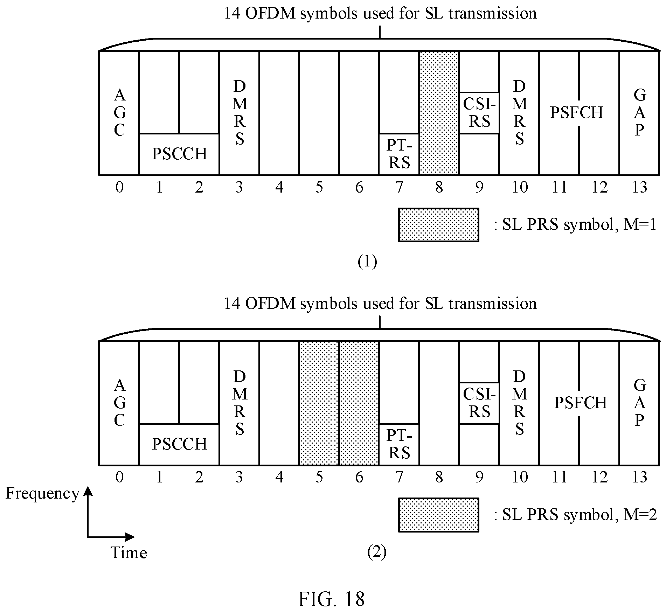

For example, it is assumed that Y=14, and $l_d$=13. The AGC symbol is a 1st symbol of the 14 OFDM symbols, the PSCCH symbol includes a 2nd symbol and a 3rd symbol of the 14 OFDM symbols, the GAP symbol is a last symbol of the 14 OFDM symbols, the PSSCH DMRS symbol includes a 4th symbol and an 11th symbol of the 14 OFDM symbols, the SL CSI-RS symbol is a 10th symbol of the 14 OFDM symbols, the SL PT-RS symbol is an 8th symbol of the 14 OFDM symbols, and the PSFCH symbol includes a 12th symbol and a 13th symbol of the 14 OFDM symbols. In this case, when M is 1, the SL PRS symbol may be a 9th symbol of the 14 OFDM symbols, as shown in (1) in FIG. 18; or when M is 2, the SL PRS symbol may include a 6th symbol and a 7th symbol of the 14 OFDM symbols, as shown in (2) in FIG. 18.

It should be noted that, in FIG. 18, an example in which a PSSCH DMRS is a DMRS, an SL CSI-RS is a CSI-RS, and an SL PT-RS is a PT-RS is used for illustration. It should be understood that, the embodiment shown in FIG. 18 is used as an example, and the location of the SL PRS symbol is not limited. For example, it is assumed that Y=14, and $l_d$=13. The AGC symbol is a 1st symbol of the 14 OFDM symbols, the PSCCH symbol includes a 2nd symbol and a 3rd symbol of the 14 OFDM symbols, the SL CSI-RS symbol is a 10th symbol of the 14 OFDM symbols, the SL PT-RS symbol is an 8th symbol of the 14 OFDM symbols, the PSFCH symbol is a 13th symbol of the 14 OFDM symbols, the GAP symbol is a last symbol of the 14 OFDM symbols, and the PSSCH DMRS symbol includes a 4th symbol and an 11th symbol of the 14 OFDM symbols. In this case, when M=1, the SL PRS symbol may be a 12th symbol of the 14 OFDM symbols; or when M is 2, the SL PRS symbol may include a 6th symbol and a 7th symbol of the 14 OFDM symbols.

In still another implementation, that the SL PRS symbol is the last M symbols other than the one or more symbols of the plurality of OFDM symbols may be specifically: The SL PRS symbol is M symbols obtained by offsetting (or shifting) the last M symbols other than the one or more symbols of the plurality of OFDM symbols by X symbols. For example, the SL PRS symbol may be M symbols obtained by offsetting (or shifting) the last M symbols other than the one or more symbols of the plurality of OFDM symbols frontward (or leftward) by X symbols. The M symbols obtained by offsetting the last M symbols by the X symbols belong to symbols other than the one or more symbols of the plurality of OFDM symbols. M is a positive integer. In addition, when M is greater than 1, the M symbols obtained by offsetting the last M symbols by the X symbols are M consecutive symbols.

X may be an integer greater than or equal to 0. In other words, X may be configured as 0. Optionally, X may be preconfigured, or may be indicated (or configured) by using second information. This is not limited. The second information may be, for example, higher layer signaling, or may be SCI. This is not limited. For example, the first terminal device (or the second terminal device) may receive the second information, where the second information indicates (or is used for configuring) X. For example, the second information may be an identifier of a time domain resource of the SL PRS (for example, an SL PRS Resource ID), and the identifier of the time domain resource of the SL PRS may indicate X.

For example, if the plurality of OFDM symbols further include the AGC symbol in addition to the SL PRS symbol, the SL PRS symbol may be M symbols obtained by offsetting last M symbols other than the AGC symbol of the plurality of OFDM symbols by the X symbols. Alternatively, if the plurality of OFDM symbols further include the AGC symbol and the GAP symbol in addition to the SL PRS symbol, the SL PRS symbol may be M symbols obtained by offsetting last M symbols other than the AGC symbol and the GAP symbol of the plurality of OFDM symbols by the X symbols. Alternatively, if the plurality of OFDM symbols further include the AGC symbol, the GAP symbol, and the PSCCH symbol in addition to the SL PRS symbol, the SL PRS symbol may be M symbols obtained by offsetting last M symbols other than the AGC symbol, the GAP symbol, and the PSCCH symbol of the plurality of OFDM symbols by the X symbols. Alternatively, if the plurality of OFDM symbols further include the AGC symbol, the GAP symbol, the PSCCH symbol, and the PSSCH DMRS symbol in addition to the SL PRS symbol, the SL PRS symbol may be M symbols obtained by offsetting last M symbols other than the AGC symbol, the GAP symbol, the PSCCH symbol, and the PSSCH DMRS symbol of the plurality of OFDM symbols by the X symbols. Alternatively, if the plurality of OFDM symbols further include the AGC symbol, the GAP symbol, the PSCCH symbol, the PSSCH DMRS symbol, and the SL CSI-RS symbol in addition to the SL PRS symbol, the SL PRS symbol may be M symbols obtained by offsetting last M symbols other than the AGC symbol, the GAP symbol, the PSCCH symbol, the PSSCH DMRS symbol, and the SL CSI-RS symbol of the plurality of OFDM symbols by the X symbols. Other cases are deduced by analogy, and are not listed one by one.

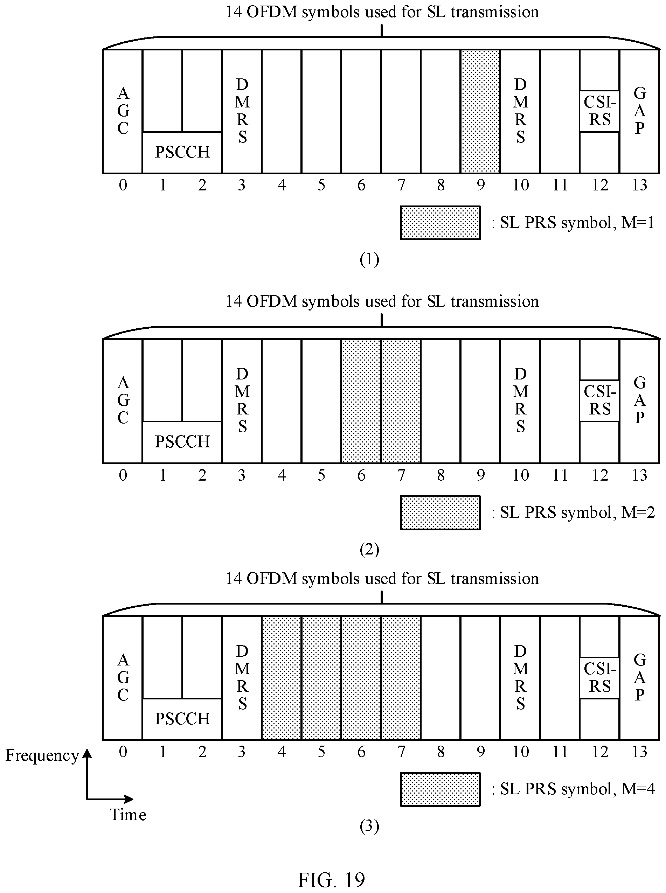

For example, it is assumed that Y=14, $I_d$=13, and X=2. The AGC symbol is a 1st symbol of the 14 OFDM symbols, the PSCCH symbol includes a 2nd symbol and a 3rd symbol of the 14 OFDM symbols, the GAP symbol is a last symbol of the 14 OFDM symbols, the PSSCH DMRS symbol includes a 4th symbol and an 11th symbol of the 14 OFDM symbols, and the SL CSI-RS symbol is a 13th symbol of the 14 OFDM symbols. In this case, when M is 1, the SL PRS symbol may be a 10th symbol of the 14 OFDM symbols, as shown in (1) in FIG. 19; or when M is 2, the SL PRS symbol may include a 7th symbol and an 8th symbol of the 14 OFDM symbols, as shown in (2) in FIG. 19; or when M is 4, the SL PRS symbol may include a 5th symbol, a 6th symbol, a 7th symbol, and an 8th symbol of the 14 OFDM symbols, as shown in (3) in FIG. 19.

It should be noted that, in FIG. 19, an example in which a PSSCH DMRS is a DMRS and an SL CSI-RS is a CSI-RS is used for illustration. It should be understood that, the embodiment shown in FIG. 19 is used as an example, and the location of the SL PRS symbol is not limited. For example, it is assumed that Y=14, $I_d$=13, and X=3. The AGC symbol is a 1st symbol of the 14 OFDM symbols, the PSCCH symbol includes a 2nd symbol and a 3rd symbol of the 14 OFDM symbols, the GAP symbol is a last symbol of the 14 OFDM symbols, the PSSCH DMRS symbol includes a 4th symbol and an 11th symbol of the 14 OFDM symbols, and the SL CSI-RS symbol is a 13th symbol of the 14 OFDM symbols. In this case, when M is 1, the SL PRS symbol may be a 9th symbol of the 14 OFDM symbols; or when M is 2, the SL PRS symbol may include a 6th symbol and a 7th symbol of the 14 OFDM symbols.

For another example, it is assumed that Y=14, $I_d$=13, and X=2. The AGC symbol is a 1st symbol of the 14 OFDM symbols, the PSCCH symbol includes a 2nd symbol and a 3rd symbol of the 14 OFDM symbols, the GAP symbol is a last symbol of the 14 OFDM symbols, the PSSCH DMRS symbol includes a 4th symbol and an 11th symbol of the 14 OFDM symbols, the SL CSI-RS symbol is a 13th symbol of the 14 OFDM symbols, and the SL PT-RS is an 8th symbol of the 14 OFDM symbols. In this case, when M is 1, the SL PRS symbol may be a 10th symbol of the 14 OFDM symbols; or when M is 2, the SL PRS symbol may include a 6th symbol and a 7th symbol of the 14 OFDM symbols.

For another example, it is assumed that Y=14, $I_d$=13, and X=2. The AGC symbol is a 1st symbol of the 14 OFDM symbols, the PSCCH symbol includes a 2nd symbol and a 3rd symbol of the 14 OFDM symbols, the GAP symbol is a last symbol of the 14 OFDM symbols, the PSSCH DMRS symbol includes a 4th symbol and an 11th symbol of the 14 OFDM symbols, the SL CSI-RS symbol is a 10th symbol of the 14 OFDM symbols, and the PSFCH symbol includes a 12th symbol and a 3rd symbol of the 14 OFDM symbols. In this case, when M is 1, the SL PRS symbol may be a 7th symbol of the 14 OFDM symbols; or when M is 2, the SL PRS symbol may include a 6th symbol and a 7th symbol of the 14 OFDM symbols.

For another example, it is assumed that Y=14, $I_d$=13, and X=2. The AGC symbol is a 1st symbol of the 14 OFDM symbols, the PSCCH symbol includes a 2nd symbol and a 3rd symbol of the 14 OFDM symbols, the GAP symbol is a last symbol of the 14 OFDM symbols, the PSSCH DMRS symbol includes a 4th symbol and an 11th symbol of the 14 OFDM symbols, the SL CSI-RS symbol is a 10th symbol of the 14 OFDM symbols, the SL PT-RS symbol is an 8th symbol of the 14 OFDM symbols, and the PSFCH symbol includes a 12th symbol and the 3rd symbol of the 14 OFDM symbols. In this case, when M is 1, the SL PRS symbol may be a 7th symbol of the 14 OFDM symbols.

It should be noted that, that the SL PRS symbol is the last M symbols other than the one or more symbols of the plurality of OFDM symbols may alternatively be: The SL PRS symbol is M symbols obtained by offsetting (or shifting) last M symbols other than the SL PT-RS symbol and the one or more symbols of the plurality of OFDM symbols by the X symbols; or may be: The SL PRS symbol is M symbols obtained by offsetting (or shifting) last M symbols other than the PSFCH symbol and the one or more symbols of the plurality of OFDM symbols by the X symbols; or may be: The SL PRS symbol is M symbols obtained by offsetting (or shifting) last M symbols other than the SL PT-RS symbol, the PSFCH symbol, and the one or more symbols of the plurality of OFDM symbols by the X symbols. For a specific implementation process, refer to the foregoing content. Details are not listed one by one herein.

In an implementation, a maximum quantity of time domain resources of the SL PRS is determined based on M and a symbol available for the SL PRS; or a maximum quantity of time domain resources of the SL PRS is determined based on the pattern between M and N and a symbol available for the SL PRS; or a maximum quantity of time domain resources of the SL PRS is determined based on M, the quantity of the plurality of OFDM symbols (namely, a value of Y or a value of $l_d$), and a pattern of the one or more symbols; or a maximum quantity of time domain resources of the SL PRS is determined based on the pattern between M and N, a value of Y, and a pattern of the one or more symbols; or a maximum quantity of time domain resources of the SL PRS is determined based on M, a symbol available for the SL PRS, and X; or a maximum quantity of time domain resources of the SL PRS is determined based on the pattern between M and N, a symbol available for the SL PRS, and X; or a maximum quantity of time domain resources of the SL PRS is determined based on M, a value of Y, a pattern of the one or more symbols, and X; or a maximum quantity of time domain resources of the SL PRS is determined based on the pattern between M and N, a value of Y, a pattern of the one or more symbols, and X. This is not limited.

The SL PRS is carried by the SL PRS symbol, or the SL PRS is mapped to the SL PRS symbol. The symbol available for the SL PRS may be a symbol other than the one or more symbols of the plurality of OFDM symbols; or may be a symbol other than the SL PT-RS symbol and the one or more symbols of the plurality of OFDM symbols; or may be a symbol other than the PSFCH symbol and the one or more symbols of the plurality of OFDM symbols; or may be a symbol other than the SL PT-RS symbol, the PSFCH symbol, and the one or more symbols of the plurality of OFDM symbols. N is a quantity of combs of the SL PRS, X is an offset of the SL PRS symbol, and N, X, and Y are all positive integers. M may be determined based on the pattern between M and N. The symbol available for the SL PRS may be determined based on the value of Y and the image of the one or more symbols.

For example, it is assumed that Y=14, and $l_d$=13. The symbol available for the SL PRS includes a 5th symbol, a 6th symbol, a 7th symbol, an 8th symbol, a 9th symbol, a 10th symbol, and a 12th symbol of the 14 OFDM symbols. If a value of M is one of 1, 2, and 4, the maximum quantity of time domain resources of the SL PRS is 3; or if a value of M is either of 1 and 2 (or 1 and 4, or 2 and 4), the maximum quantity of time domain resources of the SL PRS is 2; or if a value of M is only 1 (or only 2 or only 4), the maximum quantity of time domain resources of the SL PRS is 1.

Optionally, a quantity of bits occupied by the identifier of the time domain resource of the SL PRS may be determined based on the maximum quantity of time domain resources of the SL PRS. For example, the quantity of bits occupied by the identifier of the time domain resource of the SL PRS may be $\lceil \log_2 R_{max} \rceil$, where $R_{max}$ is the maximum quantity of time domain resources of the SL PRS, and $\lceil \cdot \rceil$ means a rounding-up operation.

In the foregoing embodiments of this application, the SL PRS symbol is the last M symbols other than the one or more symbols of the plurality of OFDM symbols used for SL transmission in one slot. The value of M is configured by using the higher layer signaling and/or the SCI. This means that a terminal device (for example, the first terminal device or the second terminal device) can uniquely determine the location of the SL PRS symbol in the plurality of OFDM symbols, so that the location of the SL PRS symbol is determined, and SL positioning performance can be improved.

In embodiments provided in this application, the method provided in embodiments of this application is described from the perspective of interaction between the first terminal device and the second terminal device. Steps performed by the terminal device (for example, the first terminal device or the second terminal device) may be implemented by different functional entities that form the terminal device. The terminal device (for example, the first terminal device or the second terminal device) may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes, with reference to the accompanying drawings, a communication apparatus configured to implement the foregoing method in embodiments of this application. Therefore, all the foregoing content may be used in the following embodiments. Repeated content is not described again.

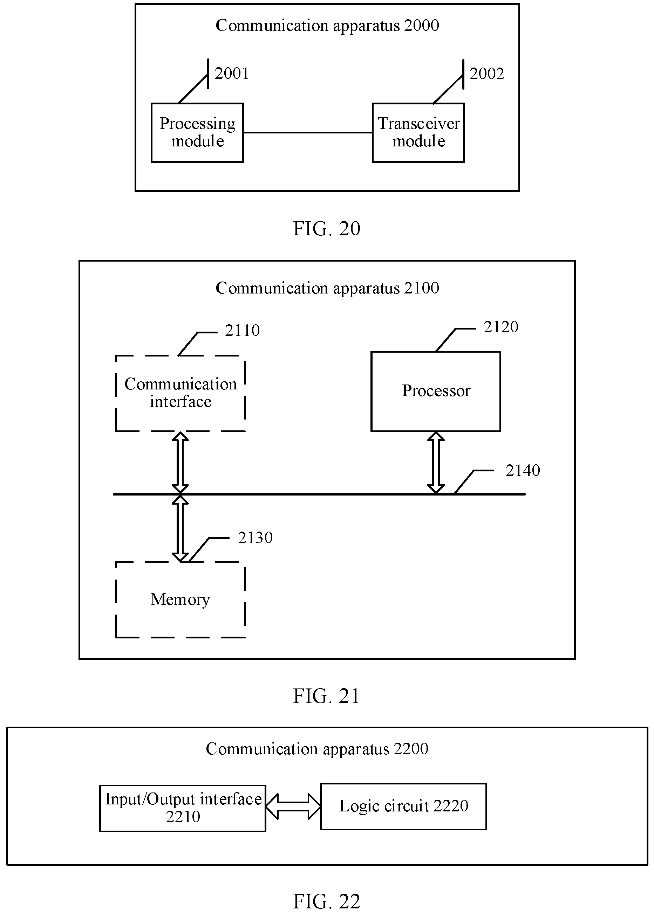

FIG. 20 is a diagram of a structure of a communication apparatus 2000. The communication apparatus 2000 may implement functions or steps implemented by the terminal device (for example, the first terminal device or the second terminal device) in the foregoing method embodiments.

In an implementation, the communication apparatus 2000 may include a processing module 2001 and a transceiver module 2002. The processing module 2001 may be configured to perform data processing, for example, perform steps of any communication apparatus (for example, the first terminal device or the second terminal device) in any one of the foregoing method embodiments. The transceiver module 2002 may be configured to implement a corresponding communication function, for example, receive or send related data, information, or a message. The transceiver module 2002 may also be referred to as a communication interface, a communication module, a transceiver unit, or the like.

It should be noted that, the communication apparatus 2000 may include the processing module 2001, but does not include the transceiver module 2002. Alternatively, the communication apparatus 2000 may include the transceiver module 2002, but does not include the processing module 2001. This may be specifically determined depending on whether the foregoing solutions performed by the communication apparatus 2000 include a processing action and a receiving and sending action.

Optionally, the communication apparatus 2000 may further include a storage module, not shown in FIG. 20. The storage module may be configured to store instructions and/or data, and the processing module 2001 may read the instructions and/or the data in the storage module, to enable the communication apparatus 2000 to implement the foregoing method embodiments.

Optionally, the transceiver module 2002 may include a sending module and a receiving module. The sending module is configured to perform the sending operation in the foregoing method embodiments. The receiving module is configured to perform the receiving operation in the foregoing method embodiments.

It should be noted that, the communication apparatus 2000 may include the sending module, but does not include the receiving module. Alternatively, the communication apparatus 2000 may include the receiving module, but not include the sending module. This may be specifically determined depending on whether the foregoing solutions performed by the communication apparatus 2000 include a sending action and a receiving action.

In an implementation, the communication apparatus 2000 may implement functions or steps implemented by the first terminal device in any one of the foregoing method embodiments. The communication apparatus 2000 may be the first terminal device, or may be a component configured in the first terminal apparatus. The processing module 2001 is configured to perform a processing-related operation on a first terminal device side in the foregoing method embodiments. The transceiver module 2002 is configured to perform a receiving and sending-related operation on the first terminal device side in the foregoing method embodiments.

Optionally, the communication apparatus 2000 may be configured to perform actions performed by the first terminal device in the embodiment shown in FIG. 3. For details, refer to related descriptions in the embodiment shown in FIG. 3. Details are not described herein again. For example, the communication apparatus 2000 may perform the following solution:

The processing module 2001 may be configured to generate a plurality of OFDM symbols, where the plurality of OFDM symbols are symbols used for sidelink transmission in one slot, the plurality of OFDM symbols include one or more of the following symbols: an AGC symbol, a GAP symbol, a PSCCH symbol, a PSSCH DMRS symbol, or an SL CSI-RS symbol, the plurality of OFDM symbols further include an SL PRS symbol, and the SL PRS symbol is last M symbols other than the one or more symbols of the plurality of OFDM symbols, where M is 1 or M is a positive integer greater than 1, and when M is greater than 1, the M symbol includes M consecutive symbols. The transceiver module 2002 is configured to send the plurality of OFDM symbols.

The transceiver module 2002 may be configured to send the plurality of OFDM symbols to a second terminal device.

Optionally, the SL CSI-RS symbol is a semi-statically configured symbol, and the transceiver module 2002 is further configured to send first information. The first information indicates the first terminal device to send an SL CSI-RS, or indicates the first terminal device not to send an SL CSI-RS.

Optionally, the transceiver module 2002 is further configured to receive second information, where the second information indicates X.

Optionally, the transceiver module 2002 is further configured to receive third information, where the third information indicates M.

In another implementation, the communication apparatus 2000 may implement functions or steps implemented by the second terminal device in any one of the foregoing method embodiments. The communication apparatus 2000 may be the second terminal device, or may be a component configured in the second terminal apparatus. The processing module 2001 is configured to perform a processing-related operation on a second terminal device side in the foregoing method embodiments. The transceiver module 2002 is configured to perform a receiving and sending-related operation on the second terminal device side in the foregoing method embodiments.

Optionally, the communication apparatus 2000 may be configured to perform actions performed by the second terminal device in the embodiment shown in FIG. 3. For details, refer to related descriptions in the embodiment shown in FIG. 3. Details are not described herein again. For example, the communication apparatus 2000 may perform the following solution:

The transceiver module 2002 is configured to receive a plurality of OFDM symbols, where the plurality of OFDM symbols are symbols used for sidelink transmission in one slot, the plurality of OFDM symbols include one or more of the following symbols: an AGC symbol, a GAP symbol, a PSCCH symbol, a PSSCH DMRS symbol, or an SL CSI-RS symbol, the plurality of OFDM symbols further include an SL PRS symbol, and the SL PRS symbol is last M symbols other than the one or more symbols of the plurality of OFDM symbols, where M is 1 or M is an integer greater than 1, and when M is greater than 1, the M symbols are M consecutive symbols. For example, the transceiver module 2002 is configured to receive a plurality of OFDM symbols from the first terminal device.

The processing module 2001 is configured to determine the SL PRS symbol.

Optionally, the SL CSI-RS symbol is a semi-statically configured symbol, and the transceiver module 2002 is further configured to receive first information. The first information indicates the first terminal device to send an SL CSI-RS, or indicates the first terminal device not to send an SL CSI-RS.

Optionally, the transceiver module 2002 is further configured to receive second information, where the second information indicates X.

Optionally, the transceiver module 2002 is further configured to receive third information, where the third information indicates M.

It should be understood that, for more detailed descriptions of corresponding processes performed by the modules, directly refer to related descriptions in the method embodiment shown in FIG. 3. For brevity, details are not described herein again.

The processing module 2001 in the foregoing embodiments may be implemented by at least one processor or processor-related circuit. The transceiver module 2002 may be implemented by a transceiver or a transceiver-related circuit. The storage module may be implemented by at least one memory.

FIG. 21 is a diagram of a structure of a communication apparatus 2100 according to an embodiment of this application. The communication apparatus 2100 may include a processor 2120, configured to implement or support the communication apparatus 2100 in implementing a function of a first terminal device or a second terminal device in any method embodiment of this application. For details, refer to the detailed descriptions in the foregoing method embodiments. Details are not described herein again. For example, the processor 2120 is configured to read and execute program instructions through a communication interface, to enable the communication apparatus 2100 to implement a corresponding method. The processor 2120 may include one or more processors. This is not limited.

Specifically, the communication apparatus 2100 may be the first terminal device or a functional module located in the first terminal device, and can implement a function of the first terminal device in any method embodiment of this application; or the communication apparatus 2100 may be a second terminal device or a functional module located in the second terminal device, and can implement a function of the second terminal device in any method embodiment of this application.

It should be noted that, the foregoing mentioned functional module may be implemented by hardware, or may be implemented by a combination of hardware and software. This is not limited. When the communication apparatus 2100 includes the processor 2120, the communication apparatus 2100 may be a chip, or may be a chip system.

For example, the communication apparatus 2100 may be a chip system. The chip system may include a chip, or may include a chip and another discrete component. This is not limited.

Optionally, the communication apparatus 2100 may further include a memory 2130, configured to store program instructions and/or data. The memory 2130 is coupled to the processor 2120. The coupling may be understood as an indirect coupling or a communication connection between apparatuses, units, or modules, may be in an electrical form, a mechanical from, or another form, and is for information exchange between the apparatuses, the units, or the modules. The processor 2120 may operate in collaboration with the memory 2130. The processor 2120 and the memory 2130 may be integrated together, or may be disposed separately.

Further, the processor 2120 is configured to execute the program instructions stored in the memory 2130, to enable the communication apparatus 2100 to implement a corresponding method.

One or more memories in the memory 2130 may be included in the processor, or the memory 2130, for example, an off-chip memory, may exist independently, and is connected to the processor 2120 through a communication bus (represented by a bold line 2140 in FIG. 21). The memory 2130 and the processor 2120 may also be integrated together.

Optionally, the communication apparatus 2100 further includes a communication interface 2110 (represented by a dashed line in FIG. 21), configured to communicate with another device through a transmission medium, so that an apparatus in the communication apparatus 2100 may communicate with the another device. For example, when the communication apparatus is the first terminal device, the another device may be the second terminal device or the like. The processor 2120 may receive and send data through the communication interface 2110. For example, the processor 2120 may be configured to control the communication interface 2110 to receive and/or send a signal.

Optionally, when the communication apparatus 2100 is a chip or a chip system, the communication interface 2110 may be an input/output interface.

The communication interface 2110 may be specifically a transceiver. In hardware implementation, the transceiver may be configured to implement a function of the transceiver module 2002, and the transceiver is integrated into the communication apparatus 2100 to form the communication interface 2110. For example, the transceiver may include a transmitter and a receiver, to send and receive a signal; or the transceiver may include a transmitter, and does not include a receiver, to send a signal; or the transceiver may include a receiver, and does not include a transmitter, to receive a signal.

It should be noted that, a specific connection medium between the communication interface 2110, the processor 2120, and the memory 2130 is not limited in this embodiment of this application. In FIG. 21, the memory 2130, the processor 2120, and the communication interface 2110 are connected through a communication bus 2140. A connection manner between other components is merely an example for description, and is not limited thereto. The communication bus 2140 may be classified as an address bus, a data bus, a control bus, or the like. For ease of representation, only one bold line is used to represent the bus in FIG. 21, but this does not mean that there is only one communication bus or only one type of communication bus.

In this embodiment of this application, the processor 2120 may be a general-purpose processor, a digital signal processor, an application-specific integrated circuit, a field programmable gate array or another programmable logic component, a discrete gate or a transistor logic component, or a discrete hardware component. The general-purpose processor may be a microprocessor or any conventional processor or the like. The method disclosed with reference to embodiments of this application may be performed by hardware in a processor, or may be performed by a combination of hardware and software in the processor.

In this embodiment of this application, the memory 2130 may be a non-volatile memory like a hard disk drive (hard disk drive, HDD) or a solid-state drive (solid-state drive, SSD), or may be a volatile memory (volatile memory) like a random-access memory (random-access memory, RAM). The memory may alternatively be any other medium configured to carry or store program code in a form of instructions or a data structure and that can be accessed by a computer; or may be a circuit or any other apparatus that can implement a storage function, and is configured to store program instructions and/or data.

Refer to FIG. 22. Based on the same concept, an embodiment of this application further provides another communication apparatus 2200, including an input/output interface 2210 and a logic circuit 2220. The input/output interface 2210 is configured to receive code instructions and transmit the code instructions to the logic circuit 2220. The logic circuit 2220 is configured to run the code instructions to perform the method performed by the first terminal device or the second terminal device in any one of the foregoing embodiments.

The following describes in detail an operation performed by the communication apparatus used in a terminal device or the second terminal device.

In an optional implementation, the communication apparatus 2200 may be used in the first terminal device, to perform the method performed by the first terminal device, specifically, for example, the method performed by the first terminal device in the embodiments shown in FIG. 3. For example, the communication apparatus 2200 generates a plurality of OFDM symbols, and sends the plurality of OFDM symbols.

The communication apparatus 2200 provided in this embodiment may be used in the first terminal device, to complete the method performed by the first terminal device. Therefore, for technical effects that can be achieved by this embodiment, refer to the foregoing method embodiments. Details are not described herein again.

In another optional implementation, the communication apparatus 2200 may be used in the second terminal device, to perform the method performed by the second terminal device, specifically, for example, the method performed by the second terminal device in the embodiments shown in FIG. 3. For example, the communication apparatus 2200 receives a plurality of OFDM symbols, and determines an SL PRS symbol.

The communication apparatus 2200 provided in this embodiment may be used in the second terminal device, to complete the method performed by the second terminal device. Therefore, for technical effects that can be achieved by this embodiment, refer to the foregoing method embodiments. Details are not described herein again.

An embodiment of this application further provides a communication system. The communication system may include one or more of the following: a first terminal device or a second terminal device. For the first terminal device or the second terminal device, refer to the descriptions in the foregoing method embodiments. Details are not described again.

An embodiment of this application further provides a computer-readable storage medium, including program instructions. When the program instructions are run on a computer, the computer is enabled to perform the method or steps of any communication apparatus (for example, the first terminal device or the second terminal device) in the foregoing embodiments.

An embodiment of this application further provides a computer program product, including program instructions. When the program instructions are run on a computer, the computer is enabled to perform the method or steps of any communication apparatus (for example, the first terminal device or the second terminal device) in the foregoing embodiments.

**EP 4 757 454 A1**

An embodiment of this application provides a chip system. The chip system includes a processor, configured to implement functions (for example, perform corresponding methods or steps) of the first terminal device or the second terminal device in the foregoing method. The chip system may include a chip, or may include a chip and another discrete component.

Optionally, the chip system further includes a memory, and the memory is configured to store program instructions, to enable the processor to read and execute the program instructions, so as to implement a corresponding method.

It should be understood that, sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that, the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a read-only memory (read-only memory, ROM), a random-access memory (random-access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A communication method, wherein the method comprises:

generating a plurality of orthogonal frequency division multiplexing OFDM symbols, wherein the plurality of OFDM symbols are symbols used for sidelink transmission in one slot, the plurality of OFDM symbols comprise one or more of the following symbols: an automatic gain control AGC symbol, a gap GAP symbol, a physical sidelink control channel PSCCH symbol, a physical sidelink shared channel demodulation reference signal PSSCH DMRS symbol, or a sidelink channel state information reference channel SL CSI-RS symbol, the plurality of OFDM symbols further comprise a sidelink positioning reference signal SL PRS symbol, and the SL PRS symbol is last M symbols other than the one or more symbols of the plurality of OFDM symbols, wherein M is 1 or M is an integer greater than 1, and when M is greater than 1, the M symbols are M consecutive symbols; and sending the plurality of OFDM symbols.

2. The method according to claim 1, wherein the SL CSI-RS symbol is a semi-statically configured symbol, and the method further comprises:
sending first information, wherein the first information indicates a first terminal device to send an SL CSI-RS, or indicates a first terminal device not to send an SL CSI-RS, wherein the SL CSI-RS is carried by the SL CSI-RS symbol.

3. The method according to claim 2, wherein

the plurality of OFDM symbols comprise the SL CSI-RS symbol; or
when the first information indicates the first terminal device to send the SL CSI-RS, the plurality of OFDM comprise the SL CSI-RS symbol.

4. A communication method, wherein the method comprises:

receiving a plurality of OFDM symbols, wherein the plurality of OFDM symbols are symbols used for sidelink transmission in one slot, the plurality of OFDM symbols comprise one or more of the following symbols: an AGC symbol, a GAP symbol, a PSCCH symbol, a PSSCH DMRS symbol, or an SL CSI-RS symbol, the plurality of OFDM symbols further comprise an SL PRS symbol, and the SL PRS symbol is last M symbols other than the one or more symbols of the plurality of OFDM symbols, wherein M is 1 or M is a positive integer greater than 1, and when M is greater than 1, the M symbols are M consecutive symbols; and
determining the SL PRS symbol.

5. The method according to claim 4, wherein the SL CSI-RS symbol is a semi-statically configured symbol, and the method further comprises:
receiving first information, wherein the first information indicates a first terminal device to send an SL CSI-RS, or indicates a first terminal device not to send an SL CSI-RS, wherein the SL CSI-RS is carried by the SL CSI-RS symbol.

6. The method according to claim 5, wherein

the plurality of OFDM symbols comprise the SL CSI-RS symbol; or
when the first information indicates the first terminal device to send the SL CSI-RS, the plurality of OFDM comprise the SL CSI-RS symbol.

7. The method according to any one of claims 1 to 6, wherein

the AGC symbol is a $1^{st}$ symbol of the plurality of OFDM symbols;
the GAP symbol is a last symbol of the plurality of OFDM symbols;
the PSCCH symbol comprises a $2^{nd}$ symbol and a $3^{rd}$ symbol of the plurality of OFDM symbols, or the PSCCH symbol comprises a $2^{nd}$ symbol, a $3^{rd}$ symbol, and a $4^{th}$ symbol of the plurality of OFDM symbols;
the PSSCH DMRS symbol comprises the $2^{nd}$ symbol and a $6^{th}$ symbol of the plurality of OFDM symbols, or the PSSCH DMRS symbol comprises the $4^{th}$ symbol and a $9^{th}$ symbol of the plurality of OFDM symbols, or the PSSCH DMRS symbol comprises the $4^{th}$ symbol and an $11^{th}$ symbol of the plurality of OFDM symbols, or the PSSCH DMRS symbol comprises a $5^{th}$ symbol and a $9^{th}$ symbol of the plurality of OFDM symbols, or the PSSCH DMRS symbol comprises a $5^{th}$ symbol and an $11^{th}$ symbol of the plurality of OFDM symbols, or the PSSCH DMRS symbol comprises the $2^{nd}$ symbol, a $5^{th}$ symbol, and an $8^{th}$ symbol of the plurality of OFDM symbols, or the PSSCH DMRS symbol comprises the $2^{nd}$ symbol, a $6^{th}$ symbol, and a $10^{th}$ symbol of the plurality of OFDM symbols, or the PSSCH DMRS symbol comprises the $2^{nd}$ symbol, a $7^{th}$ symbol, and a $12^{th}$ symbol of the plurality of OFDM symbols, or the PSSCH DMRS symbol comprises the $2^{nd}$ symbol, a $5^{th}$ symbol, an $8^{th}$ symbol, and an $11^{th}$ symbol of the plurality of OFDM symbols; and
the SL CSI-RS symbol is one of the $4^{th}$ symbol to a $2^{nd}$-to-last symbol of the plurality of OFDM symbols.

8. The method according to any one of claims 1 to 7, wherein

the plurality of OFDM symbols are 14 OFDM symbols, the PSSCH DMRS symbol comprises a $4^{th}$ symbol and an $11^{th}$ symbol of the 14 OFDM symbols, and the SL CSI-RS symbol is a $13^{th}$ symbol of the 14 OFDM symbols, wherein when M is 1, the SL PRS symbol is a $12^{th}$ symbol of the 14 OFDM symbols; or when M is 2, the SL PRS symbol comprises a $9^{th}$ symbol and a $10^{th}$ symbol of the 14 OFDM symbols; or when M is 4, the SL PRS symbol comprises a $7^{th}$ symbol, an $8^{th}$ symbol, a $9^{th}$ symbol, and a $10^{th}$ symbol of the 14 OFDM symbols;

the plurality of OFDM symbols are 13 OFDM symbols, the PSSCH DMRS symbol comprises a $4^{th}$ symbol and an $11^{th}$ symbol of the 13 OFDM symbols, and the SL CSI-RS symbol is a $12^{th}$ symbol of the 13 OFDM symbols, wherein when M is 1, the SL PRS symbol is a $10^{th}$ symbol of the 13 OFDM symbols; or when M is 2, the SL PRS symbol comprises a $9^{th}$ symbol and a $10^{th}$ symbol of the 13 OFDM symbols; or when M is 4, the SL PRS symbol comprises a $7^{th}$ symbol, an $8^{th}$ symbol, a $9^{th}$ symbol, and a $10^{th}$ symbol of the 14 OFDM symbols;

the plurality of OFDM symbols are 12 OFDM symbols, the PSSCH DMRS symbol comprises a $4^{th}$ symbol and an $11^{th}$ symbol of the 12 OFDM symbols, and the SL CSI-RS symbol is a $9^{th}$ symbol of the 12 OFDM symbols, wherein when M is 1, the SL PRS symbol is a $10^{th}$ symbol of the 12 OFDM symbols; or when M is 2, the SL PRS symbol comprises a $7^{th}$ symbol and an $8^{th}$ symbol of the 12 OFDM symbols; or when M is 4, the SL PRS symbol comprises a $5^{th}$ symbol, a $6^{th}$ symbol, a $7^{th}$ symbol, and an $8^{th}$ symbol of the 12 OFDM symbols;

the plurality of OFDM symbols are 11 OFDM symbols, the PSSCH DMRS symbol comprises a $4^{th}$ symbol and a $9^{th}$ symbol of the 11 OFDM symbols, and the SL CSI-RS symbol is a $10^{th}$ symbol of the 11 OFDM symbols, wherein when M is 1, the SL PRS symbol is an $8^{th}$ symbol of the 11 OFDM symbols; or when M is 2, the SL PRS symbol comprises a $7^{th}$ symbol and an $8^{th}$ symbol of the 11 OFDM symbols; or when M is 2, the SL PRS symbol comprises a $5^{th}$ symbol, a $6^{th}$ symbol, a $7^{th}$ symbol, and an $8^{th}$ symbol of the 11 OFDM symbols;

the plurality of OFDM symbols are 10 OFDM symbols, the PSSCH DMRS symbol comprises a $4^{th}$ symbol and a $9^{th}$ symbol of the 10 OFDM symbols, and the SL CSI-RS symbol is a $7^{th}$ symbol of the 10 OFDM symbols, wherein when M is 1, the SL PRS symbol is an $8^{th}$ symbol of the 10 OFDM symbols; or when M is 2, the SL PRS symbol comprises a $5^{th}$ symbol and a $6^{th}$ symbol of the 10 OFDM symbols;

the plurality of OFDM symbols are 9 OFDM symbols, the PSSCH DMRS symbol comprises a $2^{nd}$ symbol and a $6^{th}$ symbol of the 9 OFDM symbols, and the SL CSI-RS symbol is an $8^{th}$ symbol of the 9 OFDM symbols, wherein when M is 1, the SL PRS symbol is a $7^{th}$ symbol of the 9 OFDM symbols; or when M is 2, the SL PRS symbol comprises a $4^{th}$ symbol and a $5^{th}$ symbol of the 9 OFDM symbols;

the plurality of OFDM symbols are 8 OFDM symbols, the PSSCH DMRS symbol comprises a $2^{nd}$ symbol and a $6^{th}$ symbol of the 8 OFDM symbols, and the SL CSI-RS symbol is a $7^{th}$ symbol of the 8 OFDM symbols, wherein when M is 1, the SL PRS symbol is a $5^{th}$ symbol of the 8 OFDM symbols; or when M is 2, the SL PRS symbol comprises a $4^{th}$ symbol and a $5^{th}$ symbol of the 8 OFDM symbols; or

the plurality of OFDM symbols are 7 OFDM symbols, the PSSCH DMRS symbol comprises a $2^{nd}$ symbol and a $6^{th}$ symbol of the 7 OFDM symbols, and the SL CSI-RS symbol is a $4^{th}$ symbol of the 7 OFDM symbols, wherein when M is 1, the SL PRS symbol is a $5^{th}$ symbol of the 7 OFDM symbols, wherein

the AGC symbol is the $1^{st}$ symbol of the plurality of OFDM symbols, the PSCCH symbol comprises the $2^{nd}$ symbol and the $3^{rd}$ symbol of the plurality of OFDM symbols, and the GAP symbol is the last symbol of the plurality of OFDM symbols.

9. The method according to any one of claims 1 to 7, wherein the plurality of OFDM symbols further comprise a sidelink phase tracking reference signal SL PT-RS symbol; and

that the SL PRS symbol is the last M symbols other than the one or more symbols of the plurality of OFDM symbols comprises:

the SL PRS symbol is last M symbols other than the SL PT-RS symbol and the one or more symbols of the plurality of OFDM symbols.

10. The method according to claim 9, wherein the SL PT-RS symbol is time-division multiplexed with the PSCCH symbol, and the SL PT-RS symbol is further time-division multiplexed with the PSSCH DMRS symbol.

11. The method according to claim 9 or 10, wherein

the plurality of OFDM symbols are 14 OFDM symbols, the PSSCH DMRS symbol comprises a $4^{th}$ symbol and an $11^{th}$ symbol of the 14 OFDM symbols, and the SL CSI-RS symbol is a $13^{th}$ symbol of the 14 OFDM symbols, wherein when M is 1, the SL PRS symbol is a $12^{th}$ symbol of the 14 OFDM symbols; or when M is 2, the SL PRS symbol comprises a $9^{th}$ symbol and a $10^{th}$ symbol of the 14 OFDM symbols;

the plurality of OFDM symbols are 13 OFDM symbols, the PSSCH DMRS symbol comprises a $4^{th}$ symbol and an $11^{th}$ symbol of the 13 OFDM symbols, and the SL CSI-RS symbol is a $12^{th}$ symbol of the 13 OFDM symbols, wherein when M is 1, the SL PRS symbol is a $10^{th}$ symbol of the 13 OFDM symbols; or when M is 2, the SL PRS symbol comprises a $9^{th}$ symbol and a $10^{th}$ symbol of the 13 OFDM symbols;

the plurality of OFDM symbols are 12 OFDM symbols, the PSSCH DMRS symbol comprises a $4^{th}$ symbol and an

11th symbol of the 12 OFDM symbols, and the SL CSI-RS symbol is a 9th symbol of the 12 OFDM symbols, wherein when M is 1, the SL PRS symbol is a 10th symbol of the 12 OFDM symbols; or when M is 2, the SL PRS symbol comprises a 6th symbol and a 7th symbol of the 12 OFDM symbols;

the plurality of OFDM symbols are 11 OFDM symbols, the PSSCH DMRS symbol comprises a 4th symbol and a 9th symbol of the 11 OFDM symbols, and the SL CSI-RS symbol is a 10th symbol of the 11 OFDM symbols, wherein when M is 1, the SL PRS symbol is a 7th symbol of the 11 OFDM symbols; or when M is 2, the SL PRS symbol comprises a 6th symbol and a 7th symbol of the 11 OFDM symbols; or

the plurality of OFDM symbols are 10 OFDM symbols, the PSSCH DMRS symbol comprises a 4th symbol and a 9th symbol of the 10 OFDM symbols, and the SL CSI-RS symbol is a 7th symbol of the 10 OFDM symbols, wherein when M is 1, the SL PRS symbol is a 6th symbol of the 10 OFDM symbols; or when M is 2, the SL PRS symbol comprises a 5th symbol and a 6th symbol of the 10 OFDM symbols, wherein

the AGC symbol is the 1st symbol of the plurality of OFDM symbols, the PSCCH symbol comprises the 2nd symbol and the 3rd symbol of the plurality of OFDM symbols, the SL PT-RS symbol is the 8th symbol of the plurality of OFDM symbols, and the GAP symbol is the last symbol of the plurality of OFDM symbols.

12. The method according to any one of claims 1 to 7, claim 9, or claim 10, wherein the plurality of OFDM symbols further comprise a physical sidelink feedback channel PSFCH symbol; and
that the SL PRS symbol is the last M symbols other than the one or more symbols of the plurality of OFDM symbols comprises:

the SL PRS symbol is last M symbols other than the PSFCH symbol and the one or more symbols of the plurality of OFDM symbols.

13. The method according to claim 12, wherein the PSFCH symbol is the 2nd-to-last symbol of the plurality of OFDM symbols, or the PSFCH symbol comprises the 2nd-to-last symbol and a 3rd-to-last symbol of the plurality of OFDM symbols.

14. The method according to claim 12 or 13, wherein when the plurality of OFDM symbols are 14 OFDM symbols,

M is 1, and the SL PRS symbol is a 9th symbol of the 14 OFDM symbols;
M is 2, and the SL PRS symbol comprises an 8th symbol and a 9th symbol of the 14 OFDM symbols; or
M is 4, and the SL PRS symbol comprises a 6th symbol, a 7th symbol, an 8th symbol, and a 9th symbol of the 14 OFDM symbols, wherein
the AGC symbol is a 1st symbol of the 14 OFDM symbols, the PSCCH symbol comprises a 2nd symbol and a 3rd symbol of the 14 OFDM symbols, the PSSCH DMRS symbol is a 4th symbol and an 11th symbol of the 14 OFDM symbols, the SL CSI-RS symbol is a 10th symbol of the 14 OFDM symbols, the PSFCH symbol comprises a 12th symbol and a 13th signal of the 14 OFDM symbols, and the GAP symbol is a last symbol of the 14 OFDM symbols.

15. The method according to claim 12 or 13, wherein the plurality of OFDM symbols further comprise the SL PT-RS symbol, and when the plurality of OFDM symbols are 14 OFDM symbols,

M is 1, and the SL PRS symbol is a 9th symbol of the 14 OFDM symbols; or
M is 2, and the SL PRS symbol comprises a 6th symbol and a 7th symbol of the 14 OFDM symbols, wherein the AGC symbol is a 1st symbol of the 14 OFDM symbols, the PSCCH symbol comprises a 2nd symbol and a 3rd symbol of the 14 OFDM symbols, the PSSCH DMRS symbol is a 4th symbol and an 11th symbol of the 14 OFDM symbols, the SL PT-RS symbol is an 8th symbol of the 14 OFDM symbols, the SL CSI-RS symbol is a 10th symbol of the 14 OFDM symbols, the PSFCH symbol comprises a 12th symbol and a 13th signal of the 14 OFDM symbols, and the GAP symbol is a last symbol of the 14 OFDM symbols.

16. The method according to any one of claims 1 to 7, claim 9, claim 10, claim 12, or claim 13, wherein that the SL PRS symbol is the last M symbols other than the one or more symbols of the plurality of OFDM symbols comprises:
the SL PRS symbol is M symbols obtained by offsetting the last M symbols by X symbols, the M symbols obtained by offsetting the last M symbols by the X symbols belong to symbols other than the one or more symbols of the plurality of OFDM symbols, and X is a positive integer.

17. The method according to claim 16, wherein when the plurality of OFDM symbols are 14 OFDM symbols and X is 2,

M is 1, and the SL PRS symbol is a 10th symbol of the 14 OFDM symbols;
M is 2, and the SL PRS symbol comprises a 7th symbol and an 8th symbol of the 14 OFDM symbols; or

M is 4, and the SL PRS symbol comprises a 5th symbol, a 6th symbol, a 7th symbol, and an 8th symbol of the 14 OFDM symbols, wherein
the AGC is a 1st symbol of the 14 OFDM, the GAP symbol is a last symbol of the 14 OFDM symbols, the PSCCH symbol comprises a 2nd symbol and a 3rd symbol of the 14 OFDM, the PSSCH DMRS symbol comprises a 4th symbol and an 11th symbol of the 14 OFDM, and the SL CSI-RS symbol is a 13th symbol of the 14 OFDM symbols.

18. The method according to claim 16 or 17, wherein the method further comprises:
receiving second information, wherein the second information indicates X.

19. The method according to any one of claims 1 to 18, wherein the method further comprises:
receiving third information, wherein the third information indicates M.

20. The method according to claim 19, wherein that the third information indicates M comprises:
the third information indicates a pattern between M and N, and the pattern between M and N indicates M, wherein N is a quantity of combs of an SL PRS, the SL PRS is carried by the SL PRS, and N is a positive integer.

21. The method according to claim 19 or 20, wherein the third information is an identifier of a time domain resource of the SL PRS.

22. The method according to any one of claims 1 to 21, wherein

a maximum quantity of time domain resources of the SL PRS is determined based on M and a symbol available for the SL PRS;
a maximum quantity of time domain resources of the SL PRS is determined based on the pattern between M and N and a symbol available for the SL PRS;
a maximum quantity of time domain resources of the SL PRS is determined based on M, a quantity of the plurality of OFDM symbols, and a pattern of the one or more symbols;
a maximum quantity of time domain resources of the SL PRS is determined based on the pattern between M and N, a quantity of the plurality of OFDM symbols, and a pattern of the one or more symbols;
a maximum quantity of time domain resources of the SL PRS is determined based on M, a symbol available for the SL PRS, and X;
a maximum quantity of time domain resources of the SL PRS is determined based on the pattern between M and N, a symbol available for the SL PRS, and X;
a maximum quantity of time domain resources of the SL PRS is determined based on M, a quantity of the plurality of OFDM symbols, a pattern of the one or more symbols, and X; or
a maximum quantity of time domain resources of the SL PRS is determined based on the pattern between M and N, a quantity of the plurality of OFDM symbols, a pattern of the one or more symbols, and X, wherein
the SL PRS is carried by the SL PRS, N is the quantity of combs of the SL PRS, X is an offset of the SL PRS symbol, the symbol available for the SL PRS symbol is the symbol other than the one or more symbols of the plurality of OFDM symbols, and both N and X are positive integers.

23. A communication apparatus, wherein the communication apparatus comprises a module configured to perform the method according to any one of claims 1 to 3 and claims 7 to 22, or a module configured to perform the method according to any one of claims 4 to 22.

24. A communication apparatus, comprising at least one processor and a memory, wherein
the memory is configured to store one or more computer programs or instructions, and the at least one processor is configured to execute the one or more computer programs or the instructions stored in the memory, to enable the communication apparatus to perform the method according to any one of claims 1 to 3 and claims 7 to 22, or perform the method according to any one of claims 4 to 22.

25. A chip system, wherein the chip system comprises at least one processor, configured to execute one or more computer programs or instructions in a memory, to implement the method according to any one of claims 1 to 3 and claims 7 to 22, or implement the method according to any one of claims 4 to 22.

26. A communication system, comprising a first terminal device and a second terminal device, wherein the first terminal device is configured to perform the method according to any one of claims 1 to 3 and claims 7 to 22, and the second terminal device is configured to perform the method according to any one of claims 4 to 22.

27. A computer-readable storage medium, wherein the computer-readable storage medium stores a computer program or instructions, and the computer program or the instructions are used to implement the method according to any one of claims 1 to 3 and claims 7 to 22, or implement the method according to any one of claims 4 to 22.

28. A computer program product, comprising program instructions, wherein when the program instructions are run on a computer, the method according to any one of claims 1 to 3 and claims 7 to 22 is implemented, or the method according to any one of claims 4 to 22 is implemented.

Network device

Uu          Uu

Terminal
device 1                    PC5                    Terminal
device 2

(1)

Network device

Uu

PC5

Terminal
device 1                    Terminal
device 2

(2)

PC5

Terminal device 1                    Terminal device 2

(3)

FIG. 1

10 OFDM symbols used for SL transmission

: SL PRS symbol, M=2

(1)

10 OFDM symbols used for SL transmission

: SL PRS symbol, M=2

(2)

10 OFDM symbols used for SL transmission

: SL PRS symbol, M=2

(3)

FIG. 2

First terminal
device

Second terminal
device

S301: Generate a plurality of OFDM
symbols, where the plurality of OFDM
symbols include an SL PRS symbol,
and the SL PRS symbol is last M
symbols other than an AGC symbol, a
GAP symbol, a PSCCH symbol, a
PSSCH DMRS symbol, and an SL CSI-
RS symbol of the plurality of OFDM
symbols

S302: The plurality of OFDM symbols

S303: Determine the SL
PRS symbol

FIG. 3

14 OFDM symbols used for SL transmission

| A G C | | PSCCH | D M R S | | | | | | | D M R S | | CSI-RS | G A P |
|---|---|---|---|---|---|---|---|---|---|---|---|---|---|
| 0 | 1 | 2 | 3 | 4 | 5 | 6 | 7 | 8 | 9 | 10 | 11 | 12 | 13 |

: SL PRS symbol, M=1

(1)

14 OFDM symbols used for SL transmission

| A G C | | PSCCH | D M R S | | | | | | | D M R S | | CSI-RS | G A P |
|---|---|---|---|---|---|---|---|---|---|---|---|---|---|
| 0 | 1 | 2 | 3 | 4 | 5 | 6 | 7 | 8 | 9 | 10 | 11 | 12 | 13 |

: SL PRS symbol, M=2

(2)

14 OFDM symbols used for SL transmission

| A G C | | PSCCH | D M R S | | | | | | | D M R S | | CSI-RS | G A P |
|---|---|---|---|---|---|---|---|---|---|---|---|---|---|
| 0 | 1 | 2 | 3 | 4 | 5 | 6 | 7 | 8 | 9 | 10 | 11 | 12 | 13 |

Frequency

Time

: SL PRS symbol, M=4

(3)

FIG. 4

13 OFDM symbols used for SL transmission

: SL PRS symbol, M=1

(1)

13 OFDM symbols used for SL transmission

: SL PRS symbol, M=2

(2)

13 OFDM symbols used for SL transmission

: SL PRS symbol, M=4

(3)

FIG. 5

12 OFDM symbols used for SL transmission

| A G C | PSCCH | | D M R S | | | | | CSI-RS | | D M R S | G A P |
|---|---|---|---|---|---|---|---|---|---|---|---|
| 0 | 1 | 2 | 3 | 4 | 5 | 6 | 7 | 8 | 9 | 10 | 11 |

: SL PRS symbol, M=1

(1)

12 OFDM symbols used for SL transmission

| A G C | PSCCH | | D M R S | | | | | CSI-RS | | D M R S | G A P |
|---|---|---|---|---|---|---|---|---|---|---|---|
| 0 | 1 | 2 | 3 | 4 | 5 | 6 | 7 | 8 | 9 | 10 | 11 |

: SL PRS symbol, M=2

(2)

12 OFDM symbols used for SL transmission

| A G C | PSCCH | | D M R S | | | | | CSI-RS | | D M R S | G A P |
|---|---|---|---|---|---|---|---|---|---|---|---|
| 0 | 1 | 2 | 3 | 4 | 5 | 6 | 7 | 8 | 9 | 10 | 11 |

Frequency

Time

: SL PRS symbol, M=4

(3)

FIG. 6

11 OFDM symbols used for SL transmission

| A G C | | PSCCH | D M R S | | | | | D M R S | CSI-RS | G A P |
|---|---|---|---|---|---|---|---|---|---|---|
| 0 | 1 | 2 | 3 | 4 | 5 | 6 | 7 | 8 | 9 | 10 |

: SL PRS symbol, M=1

(1)

11 OFDM symbols used for SL transmission

| A G C | | PSCCH | D M R S | | | | | D M R S | CSI-RS | G A P |
|---|---|---|---|---|---|---|---|---|---|---|
| 0 | 1 | 2 | 3 | 4 | 5 | 6 | 7 | 8 | 9 | 10 |

: SL PRS symbol, M=2

(2)

11 OFDM symbols used for SL transmission

| A G C | | PSCCH | D M R S | | | | | D M R S | CSI-RS | G A P |
|---|---|---|---|---|---|---|---|---|---|---|
| 0 | 1 | 2 | 3 | 4 | 5 | 6 | 7 | 8 | 9 | 10 |

Frequency

Time

: SL PRS symbol, M=4

(3)

FIG. 7

10 OFDM symbols used for SL transmission

| AGC | | PSCCH | DMRS | | | CSI-RS | | DMRS | GAP |
|---|---|---|---|---|---|---|---|---|---|
| 0 | 1 | 2 | 3 | 4 | 5 | 6 | 7 | 8 | 9 |

: SL PRS symbol, M=1

(1)

10 OFDM symbols used for SL transmission

| AGC | | PSCCH | DMRS | | | CSI-RS | | DMRS | GAP |
|---|---|---|---|---|---|---|---|---|---|
| 0 | 1 | 2 | 3 | 4 | 5 | 6 | 7 | 8 | 9 |

Frequency

Time

: SL PRS symbol, M=2

(2)

FIG. 8

9 OFDM symbols used for SL transmission

| AGC | DMRS | | | | DMRS | | CSI-RS | GAP |
|-----|------|---|---|---|------|---|--------|-----|
| | PSCCH | | | | | | | |
| 0 | 1 | 2 | 3 | 4 | 5 | 6 | 7 | 8 |

: SL PRS symbol, M=1

(1)

9 OFDM symbols used for SL transmission

| AGC | DMRS | | | | DMRS | | CSI-RS | GAP |
|-----|------|---|---|---|------|---|--------|-----|
| | PSCCH | | | | | | | |
| 0 | 1 | 2 | 3 | 4 | 5 | 6 | 7 | 8 |

Frequency

: SL PRS symbol, M=2

Time

(2)

FIG. 9

8 OFDM symbols used for SL transmission

| AGC | DMRS | | | | DMRS | CSI-RS | GAP |
|-----|------|---|---|---|------|--------|-----|
| | PSCCH | | | | | | |

0    1    2    3    4    5    6    7

: SL PRS symbol, M=1

(1)

8 OFDM symbols used for SL transmission

| AGC | DMRS | | | | DMRS | CSI-RS | GAP |
|-----|------|---|---|---|------|--------|-----|
| | PSCCH | | | | | | |

0    1    2    3    4    5    6    7

Frequency

Time

: SL PRS symbol, M=2

(2)

FIG. 10

7 OFDM symbols used for SL transmission

| AGC | DMRS | | CSI-RS | | DMRS | GAP |
|-----|------|---|--------|---|------|-----|
| | PSCCH | | | | | |

0    1    2    3    4    5    6

Frequency

Time

: SL PRS symbol, M=1

FIG. 11

14 OFDM symbols used for SL transmission

| A G C | | PSCCH | D M R S | | | | | PT- RS | | | D M R S | | CSI- RS | G A P |
|---|---|---|---|---|---|---|---|---|---|---|---|---|---|
| 0 | 1 | 2 | 3 | 4 | 5 | 6 | 7 | 8 | 9 | 10 | 11 | 12 | 13 |

☐ : SL PRS symbol, M=1

(1)

14 OFDM symbols used for SL transmission

| A G C | | PSCCH | D M R S | | | | | PT- RS | | | D M R S | | CSI- RS | G A P |
|---|---|---|---|---|---|---|---|---|---|---|---|---|---|
| 0 | 1 | 2 | 3 | 4 | 5 | 6 | 7 | 8 | 9 | 10 | 11 | 12 | 13 |

Frequency ↑
Time →

☐ : SL PRS symbol, M=2

(2)

FIG. 12

13 OFDM symbols used for SL transmission

| A G C | | PSCCH | D M R S | | | | PT-RS | | | D M R S | CSI-RS | G A P |
|---|---|---|---|---|---|---|---|---|---|---|---|---|
| 0 | 1 | 2 | 3 | 4 | 5 | 6 | 7 | 8 | 9 | 10 | 11 | 12 |

: SL PRS symbol, M=1

(1)

13 OFDM symbols used for SL transmission

| A G C | | PSCCH | D M R S | | | | PT-RS | | | D M R S | CSI-RS | G A P |
|---|---|---|---|---|---|---|---|---|---|---|---|---|
| 0 | 1 | 2 | 3 | 4 | 5 | 6 | 7 | 8 | 9 | 10 | 11 | 12 |

Frequency

Time

: SL PRS symbol, M=2

(2)

FIG. 13

12 OFDM symbols used for SL transmission

: SL PRS symbol, M=1

(1)

12 OFDM symbols used for SL transmission

: SL PRS symbol, M=2

(2)

FIG. 14

11 OFDM symbols used for SL transmission

: SL PRS symbol, M=1

(1)

11 OFDM symbols used for SL transmission

: SL PRS symbol, M=2

Frequency

Time

(2)

FIG. 15

10 OFDM symbols used for SL transmission

| AGC | PSCCH | | DMRS | | | CSI-RS | PT-RS | DMRS | GAP |
|-----|-------|--|------|--|--|--------|-------|------|-----|
| 0 | 1 | 2 | 3 | 4 | 5 | 6 | 7 | 8 | 9 |

: SL PRS symbol, M=1

(1)

10 OFDM symbols used for SL transmission

| AGC | PSCCH | | DMRS | | | CSI-RS | PT-RS | DMRS | GAP |
|-----|-------|--|------|--|--|--------|-------|------|-----|
| 0 | 1 | 2 | 3 | 4 | 5 | 6 | 7 | 8 | 9 |

Frequency

Time

: SL PRS symbol, M=2

(2)

FIG. 16

14 OFDM symbols used for SL transmission

| A<br>G<br>C | PSCCH | | D<br>M<br>R<br>S | | | | | | CSI-<br>RS | D<br>M<br>R<br>S | PSFCH | G<br>A<br>P |
|---|---|---|---|---|---|---|---|---|---|---|---|---|
| 0 | 1 | 2 | 3 | 4 | 5 | 6 | 7 | 8 | 9 | 10 | 11 | 12 | 13 |

▒ : SL PRS symbol, M=1

(1)

14 OFDM symbols used for SL transmission

| A<br>G<br>C | PSCCH | | D<br>M<br>R<br>S | | | | | | CSI-<br>RS | D<br>M<br>R<br>S | PSFCH | G<br>A<br>P |
|---|---|---|---|---|---|---|---|---|---|---|---|---|
| 0 | 1 | 2 | 3 | 4 | 5 | 6 | 7 | 8 | 9 | 10 | 11 | 12 | 13 |

▒ : SL PRS symbol, M=2

(2)

14 OFDM symbols used for SL transmission

| A<br>G<br>C | PSCCH | | D<br>M<br>R<br>S | | | | | | CSI-<br>RS | D<br>M<br>R<br>S | PSFCH | G<br>A<br>P |
|---|---|---|---|---|---|---|---|---|---|---|---|---|
| 0 | 1 | 2 | 3 | 4 | 5 | 6 | 7 | 8 | 9 | 10 | 11 | 12 | 13 |

Frequency ↑ → Time

▒ : SL PRS symbol, M=4

(3)

FIG. 17

14 OFDM symbols used for SL transmission

: SL PRS symbol, M=1

(1)

14 OFDM symbols used for SL transmission

Frequency

Time

: SL PRS symbol, M=2

(2)

FIG. 18

14 OFDM symbols used for SL transmission

: SL PRS symbol, M=1

(1)

14 OFDM symbols used for SL transmission

: SL PRS symbol, M=2

(2)

14 OFDM symbols used for SL transmission

: SL PRS symbol, M=4

(3)

FIG. 19

Communication apparatus 2000

2001

Processing module

Transceiver module

2002

FIG. 20

Communication apparatus 2100

2110

Communication interface

2120

Processor

2140

2130

Memory

FIG. 21

Communication apparatus 2200

Input/Output interface 2210

Logic circuit 2220

FIG. 22

## INTERNATIONAL SEARCH REPORT

| International application No. |
| --- |
| **PCT/CN2024/118214** |

**A. CLASSIFICATION OF SUBJECT MATTER**

H04W 72/0446(2023.01)i

According to International Patent Classification (IPC) or to both national classification and IPC

**B. FIELDS SEARCHED**

Minimum documentation searched (classification system followed by classification symbols)

IPC:H04W H04Q

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: SL PRS, SL-PRS, S-PRS, 定位参考信号, OFDM, 符号, symbol?, 剩余, remaining, 最后, last, 资源, resource?, 位置, position, 时隙, slot

**C. DOCUMENTS CONSIDERED TO BE RELEVANT**

| Category* | Citation of document, with indication, where appropriate, of the relevant passages | Relevant to claim No. |
| --- | --- | --- |
| X | NOKIA et al. "Design of SL Positioning Reference Signal SL-PRS" <br> *3GPP TSG RAN WG1 #112, R1-2300040*, 03 March 2023 (2023-03-03), <br> section 2 | 1-28 |
| A | FRAUNHOFER IIS et al. "Considerations on SL-PRS Resource Allocation" <br> *3GPP TSG RAN WG1 #112, R1-2301144*, 03 March 2023 (2023-03-03), <br> entire document | 1-28 |
| A | NOKIA et al. "RRM Requirements for SL Positioning" <br> *3GPP TSG-RAN WG4 Meeting #107, R4-2309676*, 26 May 2023 (2023-05-26), <br> entire document | 1-28 |
| A | CN 116709371 A (LG ELECTRONICS INC.) 05 September 2023 (2023-09-05) <br> entire document | 1-28 |
| A | WO 2021040495 A1 (LG ELECTRONICS INC.) 04 March 2021 (2021-03-04) <br> entire document | 1-28 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 November 2024** | **20 November 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/118214**

| Patent document cited in search report | | | Publication date (day/month/year) | Patent family member(s) | | | Publication date (day/month/year) |
|---|---|---|---|---|---|---|---|
| CN | 116709371 | A | 05 September 2023 | US | 2023283434 | A1 | 07 September 2023 |
| | | | | KR | 20230129285 | A | 08 September 2023 |
| | | | | EP | 4239931 | A1 | 06 September 2023 |
| WO | 2021040495 | A1 | 04 March 2021 | US | 2022317229 | A1 | 06 October 2022 |
| | | | | JP | 2022545725 | A | 28 October 2022 |
| | | | | KR | 20220052936 | A | 28 April 2022 |
| | | | | EP | 4024973 | A1 | 06 July 2022 |
| | | | | CN | 114342427 | A | 12 April 2022 |

Form PCT/ISA/210 (patent family annex) (July 2022)

**REFERENCES CITED IN THE DESCRIPTION**

**Patent documents cited in the description**

- CN 202311271055